# EUROPEAN PATENT APPLICATION

(11) **EP 4 733 844 A1**
(43) Date of publication of application: **29.04.2026**
(21) Application number: 25172296.3
(22) Date of filing: 24.04.2025
(51) Int. Cl.: G03G 5/04, G03G 5/05

(54) **ELECTROPHOTOGRAPHIC PHOTORECEPTOR, PROCESS CARTRIDGE, AND IMAGE FORMING APPARATUS**

(30) Priority: 24.07.2024 JP 2024118936
(71) Applicant: FUJIFILM Business Innovation Corp., Minato-ku Tokyo (JP)
(72) Inventor: WATANABE, Yusuke, Ebina-shi, Kanagawa (JP); YAMADA, Wataru, Ebina-shi, Kanagawa (JP); KIGOSHI, Yoichi, Ebina-shi, Kanagawa (JP); TAKAOKA, Kohei, Ebina-shi, Kanagawa (JP); SASAKI, Tomoya, Ebina-shi, Kanagawa (JP); IDE, Kenta, Ebina-shi, Kanagawa (JP); KANO, Fuyuki, Ebina-shi, Kanagawa (JP); KUSANO, Keisuke, Ebina-shi, Kanagawa (JP); OYAMADA, Yuki, Ebina-shi, Kanagawa (JP)
(74) Representative: Becker Kurig & Partner Patentanwälte mbB

(57) **Abstract**

An electrophotographic photoreceptor includes a conductive substrate, and a photosensitive layer disposed on the conductive substrate, in which an outermost surface layer contains a charge transport material, two or more kinds of resins, and a phenolic compound, and RzJIS on an outer peripheral surface is 0.1 nm or more and 100 nm or less.

## Description

### BACKGROUND OF THE INVENTION

### (i) Field of the Invention

The present disclosure relates to an electrophotographic photoreceptor, a process cartridge, and an image forming apparatus.

### (ii) Description of Related Art

JP2007-108420A discloses an image forming apparatus in which a cleaning-less system is disposed, the cleaning-less system being obtained by omitting a cleaning member for scraping off untransferred toner remaining on a surface of an image carrier, the surface of the image carrier having a Vickers hardness of 714000 to 1326500 N/cm² and a surface average roughness Ra of 1.0 nm or more and 9.0 nm or less in a range of 10 µm × 10 µm of the image carrier.

JP2003-43709A discloses an image forming apparatus in which a ten-point average surface roughness (Rz) of a surface of an electrophotographic photoreceptor is 1.00 µm or less.

JP1995-92697A (JP-H7-92697A) discloses an electrophotographic photoreceptor in which a convex portion on an uneven surface of an outermost surface of a photoreceptor is a smooth curved surface.

### SUMMARY OF THE INVENTION

An object of the present disclosure is to provide an electrophotographic photoreceptor in which contamination of a charging member and a noise caused by vibration of a photoreceptor cleaning blade are less likely to occur for a long period of time, as compared with an electrophotographic photoreceptor in which RzJIS of an outer peripheral surface is less than 0.1 nm or more than 100 nm.

Specific methods for achieving the above-described object include the following aspects. Each formula is the same as the formula having the same number described later.
<1>
   According to a first aspect of the present disclosure, there is provided an electrophotographic photoreceptor including a conductive substrate, and a photosensitive layer disposed on the conductive substrate, in which an outermost surface layer contains a charge transport material, two or more kinds of resins, and a phenolic compound, and RzJIS on an outer peripheral surface is 0.1 nm or more and 100 nm or less.
<2>
   According to a second aspect of the present disclosure, there is provided the electrophotographic photoreceptor according to <1>, in which the RzJIS of the outer peripheral surface may be 0.5 nm or more and 50 nm or less.
<3>
   According to a third aspect of the present disclosure, there is provided the electrophotographic photoreceptor according to <1> or <2>, in which the phenolic compound may include a hindered phenolic compound.
<4>
   According to a fourth aspect of the present disclosure, there is provided the electrophotographic photoreceptor according to any one of <1> to <3>, in which the two or more kinds of resins may include at least one of a polyarylate resin or a polycarbonate resin.
<5>
   According to a fifth aspect of the present disclosure, there is provided the electrophotographic photoreceptor according to any one of <1> to <4>, in which the two or more kinds of resins may include a polyarylate resin having a dicarboxylic acid unit represented by Formula (A) and a diol unit represented by Formula (B).
<6>
   According to a sixth aspect of the present disclosure, there is provided the electrophotographic photoreceptor according to <5>, in which the dicarboxylic acid unit represented by Formula (A) may include at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented Formula (A4), and a dicarboxylic acid unit (A5) represented by Formula (A5).
<7>
   According to a seventh aspect of the present disclosure, there is provided the electrophotographic photoreceptor according to <5> or <6>, in which the diol unit represented by Formula (B) may include at least one selected from the group consisting of a diol unit (B1) represented by Formula (B1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).
<8>
   According to an eighth aspect of the present disclosure, there is provided the electrophotographic photoreceptor according to any one of <1> to <7>, in which the outermost surface layer may contain a polyarylate resin and a polycarbonate resin.
<9>
   According to a ninth aspect of the present disclosure, there is provided the electrophotographic photoreceptor according to <8>, in which the polyarylate resin and the polycarbonate resin each may have a constitutional unit including biphenyl represented by Formula (BP).
<10>
   According to a tenth aspect of the present disclosure, there is provided the electrophotographic photoreceptor according to <8> or <9>, in which a proportion of the polyarylate resin in a total amount of the polyarylate resin and the polycarbonate resin contained in the outermost surface layer may be 25% by mass or more and 75% by mass or less.
<11>
   According to an eleventh aspect of the present disclosure, there is provided the electrophotographic photoreceptor according to any one of <1> to <10>, in which the photosensitive layer may include a charge generation layer and a charge transport layer, and the charge transport layer may be the outermost surface layer.
<12>
   According to a twelfth aspect of the present disclosure, there is provided a process cartridge including the electrophotographic photoreceptor according to any one of <1> to <11>, in which the process cartridge may be attachable to and detachable from an image forming apparatus.
<13>
   According to a thirteenth aspect of the present disclosure, there is provided an image forming apparatus including the electrophotographic photoreceptor according to any one of <1> to <11>, a charging device that charges a surface of the electrophotographic photoreceptor, an electrostatic latent image forming device that forms an electrostatic latent image on the charged surface of the electrophotographic photoreceptor, a developing device that develops the electrostatic latent image formed on the surface of the electrophotographic photoreceptor with a developer containing a toner to form a toner image, a transfer device that transfers the toner image to a surface of a recording medium, and a cleaning device that has a cleaning blade coming into contact with the surface of the electrophotographic photoreceptor and cleans the surface of the electrophotographic photoreceptor.

According to <1>, <3>, <4>, <5>, <6>, <7>, or <11>, there is provided an electrophotographic photoreceptor in which contamination of a charging member and a noise caused by vibration of a photoreceptor cleaning blade are less likely to occur for a long period of time, as compared with an electrophotographic photoreceptor in which RzJIS of an outer peripheral surface is less than 0.1 nm or more than 100 nm.

According to <2>, there is provided an electrophotographic photoreceptor in which contamination of a charging member and a noise caused by vibration of a photoreceptor cleaning blade are less likely to occur for a long period of time, as compared with an electrophotographic photoreceptor in which RzJIS of an outer peripheral surface is less than 0.5 nm or more than 50 nm.

According to <8>, there is provided an electrophotographic photoreceptor in which contamination of a charging member and a noise caused by vibration of a photoreceptor cleaning blade are less likely to occur for a long period of time, as compared with a form in which an outermost surface layer contains only one of a polyarylate resin or a polycarbonate resin.

According to <9>, there is provided an electrophotographic photoreceptor in which contamination of a charging member and a noise caused by vibration of a photoreceptor cleaning blade are less likely to occur for a long period of time, as compared with a form in which at least one of a polyarylate resin or a polycarbonate resin does not have a constitutional unit including biphenyl represented by Formula (BP).

According to <10>, there is provided an electrophotographic photoreceptor in which contamination of a charging member and a noise caused by vibration of a photoreceptor cleaning blade are less likely to occur for a long period of time, as compared with an electrophotographic photoreceptor in which a proportion of a polyarylate resin in a total amount of a polyarylate resin and a polycarbonate resin included in an outermost surface layer is less than 25% by mass or more than 75% by mass.

According to <12>, there is provided a process cartridge in which contamination of a charging member and a noise caused by vibration of a photoreceptor cleaning blade are less likely to occur for a long period of time, as compared with a process cartridge in which RzJIS of an outer peripheral surface of an electrophotographic photoreceptor is less than 0.1 nm or more than 100 nm.

According to <13>, there is provided an image forming apparatus in which contamination of a charging member and a noise caused by vibration of a photoreceptor cleaning blade are less likely to occur for a long period of time, as compared with an image forming apparatus in which RzJIS of an outer peripheral surface of an electrophotographic photoreceptor is less than 0.1 nm or more than 100 nm.

### BRIEF DESCRIPTION OF THE DRAWINGS

Exemplary embodiment(s) of the present invention will be described in detail based on the following figures, wherein:
Fig. 1 is a partial cross-sectional view showing an example of a layer configuration of an electrophotographic photoreceptor according to a first exemplary embodiment;
Fig. 2 is a partial cross-sectional view showing an example of a layer configuration of an electrophotographic photoreceptor according to a second exemplary embodiment;
Fig. 3 is a schematic configuration view showing an example of an image forming apparatus according to the present exemplary embodiment; and
Fig. 4 is a schematic configuration view showing a configuration of another example of the image forming apparatus according to the present exemplary embodiment.

### DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit or lower limit of a numerical range may be replaced with the upper limit or lower limit of another numerical range described in stages. Furthermore, in the present disclosure, the upper limit or lower limit of a numerical range may be replaced with values described in examples.

In the present disclosure, "A and/or B" is synonymous with "at least one of A or B". That is, "A and/or B" means that A alone may be used, B alone may be used, or a combination of A and B may be used.

In the present disclosure, the term "step" includes not only an independent step but a step that is not clearly distinguished from other steps as long as the purpose of the step is achieved.

In the present disclosure, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where a plurality of kinds of particles corresponding to each component are present in a composition, the particle diameter of each component indicates the value of a mixture of the plurality of kinds of particles present in the composition, unless otherwise specified.

In the present disclosure, an alkyl group and an alkylene group include all linear, branched, and cyclic shapes unless otherwise specified.

In the present disclosure, a hydrogen atom in an organic group, an aromatic ring, a linking group, an alkyl group, an alkylene group, an aryl group, an aralkyl group, an alkoxy group, an aryloxy group, and the like may be substituted with a halogen atom.

In the present disclosure, in a case where a compound is represented by a structural formula, the compound may be represented by a structural formula in which symbols representing a carbon atom and a hydrogen atom (C and H) in a hydrocarbon group and/or a hydrocarbon chain are omitted.

In the present disclosure, "constitutional unit" of a copolymer or a resin is the same as a monomer unit.

### <Electrophotographic Photoreceptor>

An electrophotographic photoreceptor (hereinafter, also referred to as "photoreceptor") according to the present exemplary embodiment includes a conductive substrate, and a photosensitive layer disposed on the conductive substrate.

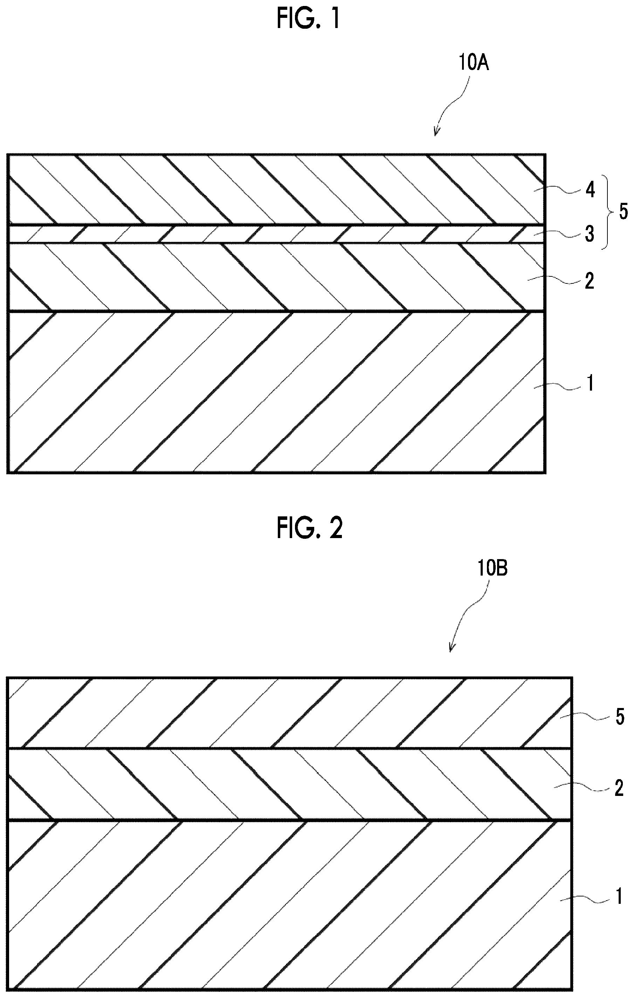

Fig. 1 is a partial cross-sectional view schematically showing an example of a layer configuration of the photoreceptor according to the present exemplary embodiment. A photoreceptor 10A shown in Fig. 1 includes a lamination-type photosensitive layer. The photoreceptor 10A has a structure in which an undercoat layer 2, a charge generation layer 3, and a charge transport layer 4 are laminated in this order on a conductive substrate 1, and the charge generation layer 3 and the charge transport layer 4 constitute a photosensitive layer 5 (so-called function separation-type photosensitive layer). The photoreceptor 10A may include an interlayer (not shown) between the undercoat layer 2 and the charge generation layer 3. The undercoat layer 2 may or may not be provided.

Fig. 2 is a partial cross-sectional view schematically showing another example of the layer configuration of the photoreceptor according to the present exemplary embodiment. A photoreceptor 10B shown in Fig. 2 includes a single layer-type photosensitive layer. The photoreceptor 10B has a structure in which the undercoat layer 2 and the photosensitive layer 5 are laminated in this order on the conductive substrate 1. The photoreceptor 10B may include an interlayer (not shown) between the undercoat layer 2 and the photosensitive layer 5. The undercoat layer 2 may or may not be provided.

In the photoreceptor according to the present exemplary embodiment, an outermost surface layer contains a charge transport material, two or more kinds of resins, and a phenolic compound, and RzJIS on an outer peripheral surface is 0.1 nm or more and 100 nm or less. The outer peripheral surface of the photoreceptor is, in other words, an exposed surface of the outermost surface layer of the photoreceptor.

According to an example of the exemplary embodiment, the photoreceptor includes a lamination-type photosensitive layer in which a charge generation layer and a charge transport layer are laminated, the charge transport layer is the outermost surface layer, and the charge transport layer constitutes an outer peripheral surface.

According to another example of the exemplary embodiment, the photoreceptor includes a single layer-type photosensitive layer, the single layer-type photosensitive layer is the outermost surface layer, and the single layer-type photosensitive layer constitutes an outer peripheral surface.

A method of measuring RzJIS of the outer peripheral surface of the photoreceptor is as follows.

The outermost surface layer is peeled off from the photoreceptor and attached to a flat plate with double-sided tape. The outermost surface layer on the plate is subjected to an electrostatic discharge treatment and is used as a sample. The electrostatic discharge treatment is performed for 15 minutes, for example, using an electrostatic discharge blower SIB-10DC (AS ONE Corporation).

A surface of the sample is scanned under the following measurement conditions using an atomic force microscope (AFM) to obtain three-dimensional data of a surface shape.
· Atomic force microscope: AFM5200S, manufactured by Hitachi High-Tech Corporation
· Cantilever: SI-DF40, manufactured by Hitachi High-Tech Fielding Corporation
· Measurement mode: dynamic force mode
· Measurement data type: shape image
· Measurement area: 5 µm × 5 µm

Three-dimensional data of the surface shape is subjected to flat processing in the X-axis direction and the Y-axis direction, a line profile is taken in the Z-axis direction, and ten-point average roughness RzJIS (JIS B0601) is obtained.

In the photoreceptor according to the present exemplary embodiment, since the outermost surface layer contains a charge transport material, two or more kinds of resins, and a phenolic compound, and RzJIS of an outer peripheral surface is 0.1 nm or more and 100 nm or less, contamination of a charging member and a noise (so-called "blade chattering") caused by vibration of a photoreceptor cleaning blade are less likely to occur for a long period of time. The mechanism is presumed as follows.

In the related art, in order to reduce a friction coefficient of an outer peripheral surface of a photoreceptor, fluororesin particles are contained in an outermost surface layer of the photoreceptor. However, since there is a high possibility that regulations on manufacturing and use of organic fluorine compounds are strengthened in the future, there is a demand for a technology to replace an internal addition of the fluororesin particles.

In addition, there is a technology of polishing the outer peripheral surface of the photoreceptor to form minute roughness as a measure for reducing the friction coefficient of the outer peripheral surface of the photoreceptor. However, the roughness formed by polishing is worn and disappears with the use of the photoreceptor, and thus the friction coefficient of the outer peripheral surface of the photoreceptor gradually increases.

On the other hand, in the photoreceptor according to the present exemplary embodiment, the outermost surface layer contains two or more kinds of resins and a phenolic compound, thereby reducing the friction coefficient of the outer peripheral surface. During the formation of the outermost surface layer, the phenolic compound promotes phase separation of two or more kinds of resins, and a nano-order fine phase separation structure is formed in the outermost surface layer. Due to this fine phase separation structure, fine roughness is formed on the outer peripheral surface of the photoreceptor, and the friction coefficient can be suppressed to be low. In addition, since a fine phase separation structure is also present inside the outermost surface layer, even in a case where the outermost surface layer is worn due to the use of the photoreceptor, fine roughness newly appears on the outer peripheral surface, and the friction coefficient can be suppressed to be low. In addition, a lubricating component (for example, a higher fatty acid metal salt which is an external additive, a hydrophobic agent (for example, silicone oil) present on a surface of external additive particles, and the like) contained in a toner enters the fine roughness of the outer peripheral surface of the photoreceptor, and thus the friction coefficient can be suppressed to be low.

Since the photoreceptor according to the present exemplary embodiment can continuously suppress the friction coefficient to be low, a cleaning property of the cleaning blade on the outer peripheral surface of the photoreceptor is good for a long period of time. As a result, contamination of the charging member and blade chattering of the photoreceptor cleaning blade are less likely to occur for a long period of time.

The contamination of the charging member is likely to occur in a charging member of a method in which the charging member comes into contact with the outer peripheral surface of the photoreceptor, and the contamination may occur in a charging member of a method in which the charging member does not come into contact with the outer peripheral surface of the photoreceptor because a contaminant is electrostatically adsorbed.

In the photoreceptor according to the present exemplary embodiment, RzJIS of the outer peripheral surface is 0.1 nm or more and 100 nm or less.

In a case where the RzJIS of the outer peripheral surface is less than 0.1 nm, the outer peripheral surface is too smooth, so that the friction coefficient is high. In addition, it is presumed that in a case where the RzJIS of the outer peripheral surface is less than 0.1 nm, the lubricating component contained in the toner cannot be sufficiently held. From the viewpoint of suppressing the friction coefficient, the RzJIS of the outer peripheral surface is 0.1 nm or more, and for example, preferably 0.3 nm or more, more preferably 0.5 nm or more, and still more preferably 1 nm or more.

In a case where the RzJIS of the outer peripheral surface is more than 100 nm, the roughness is too large, so that the friction coefficient is high. From the viewpoint of suppressing the friction coefficient, the RzJIS of the outer peripheral surface is 100 nm or less, and for example, preferably 80 nm or less, more preferably 50 nm or less, and still more preferably 40 nm or less.

The control of the RzJIS of the outer peripheral surface of the photoreceptor in a range of 0.1 nm or more and 100 nm or less can be realized by using a composition containing two or more kinds of resins and a phenolic compound for forming the outermost surface layer. In this case, a value of the RzJIS can be controlled by adjusting a combination and a mass ratio of two or more kinds of resins and an amount of the phenolic compound used.

### [Outermost Surface Layer]

The outermost surface layer of the photoreceptor contains a charge transport material, two or more kinds of resins, and a phenolic compound.

Examples of the charge transport material contained in the outermost surface layer include the same compound as the charge transport material contained in the charge transport layer described later. For example, the same applies to the preferred compound.

Examples of the resin contained in the outermost surface layer include a polyarylate resin, a polycarbonate resin, a polyester resin other than the polyarylate resin, a methacrylic resin, an acrylic resin, a polyvinyl chloride resin, a polyvinylidene chloride resin, a polystyrene resin, a polyvinyl acetate resin, a styrene-butadiene copolymer, a vinylidene chloride-acrylonitrile copolymer, a vinyl chloride-vinyl acetate copolymer, a vinyl chloride-vinyl acetate-maleic anhydride copolymer, a silicone resin, a silicone alkyd resin, a phenol-formaldehyde resin, a styrene-alkyd resin, poly-N-vinylcarbazole, and polysilane. Two or more kinds of resins may be used in any combination of these resins.

From the viewpoint of abrasion resistance of the outermost surface layer, for example, the resin contained in the outermost surface layer preferably includes at least one of a polyarylate resin or a polycarbonate resin, and more preferably includes a polyarylate resin and a polycarbonate resin. For example, a form in which a polyarylate resin and a polycarbonate resin are contained is also preferable from the viewpoint of forming a fine phase separation structure in the outermost surface layer.

From the viewpoint of forming a fine phase separation structure in the outermost surface layer, a proportion of the polyarylate resin in a total amount of the polyarylate resin and the polycarbonate resin contained in the outermost surface layer of the photoreceptor is, for example, preferably 20% by mass or more and 80% by mass or less, more preferably 25% by mass or more and 75% by mass or less, and still more preferably 30% by mass or more and 70% by mass or less.

In the polyarylate resin, resin molecules are bonded to each other by an intermolecular force due to stacking of aromatic rings, and thus the abrasion resistance of the outermost surface layer is improved. As the polyarylate resin, for example, a polycondensate of bisphenols and an aromatic divalent carboxylic acid is preferable. Examples of the form of the polyarylate resin include a polyarylate resin (PA) described below.

As the polycarbonate resin, for example, a polycarbonate resin in which constitutional units having an aromatic ring are continuous is preferable. In the polycarbonate resin, resin molecules are bonded to each other by an intermolecular force due to stacking of aromatic rings, and thus the abrasion resistance of the outermost surface layer is improved. For example, preferred forms of the polycarbonate resin include, specifically, the polycarbonate resin disclosed in JP2023-121553A. For example, a polycarbonate resin used in Examples described later is shown as a more preferred form of the polycarbonate resin.

As a combination of the polyarylate resin and the polycarbonate resin, for example, a combination of resins each having a constitutional unit containing a biphenyl represented by Formula (BP) is preferable.

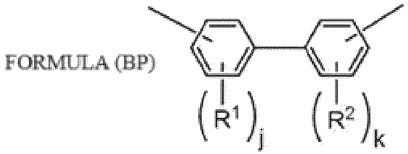

In Formula (BP), j is an integer of 0 or greater and 4 or less, j pieces of R¹'s are each independently a methyl group or an ethyl group, k is an integer of 0 or greater and 4 or less, and k pieces of R²'s are each independently a methyl group or an ethyl group.

The biphenyl represented by Formula (BP) may be an entire structure or a part of a structure obtained by removing an ester bond (-C(=O)O-) or a carbonate bond (-OC(=O)O-) from the constitutional unit including the biphenyl represented by Formula (BP). In other words, the right end and the left end of the biphenyl represented by Formula (BP) may be each independently bonded to an ester bond or a carbonate bond directly or bonded to an ester bond or a carbonate bond via another atom or an atomic group.

j is an integer of 0 or greater and 4 or less, for example, preferably an integer of 0 or greater and 3 or less, more preferably an integer of 0 or greater and 2 or less, still more preferably 0 or 1, and particularly preferably 0.

In a case where j is an integer of 1 or greater, j pieces of R¹'s are each independently a methyl group or an ethyl group and, for example, preferably a methyl group.

k is an integer of 0 or greater and 4 or less, for example, preferably an integer of 0 or greater and 3 or less, more preferably an integer of 0 or greater and 2 or less, still more preferably 0 or 1, and particularly preferably 0.

In a case where k is an integer of 1 or greater, k pieces of R²'s are each independently a methyl group or an ethyl group and, for example, preferably a methyl group.

The biphenyl represented by Formula (BP) is, for example, preferably 4,4'-biphenyl with respect to a linking position in a main chain.

As a combination of the polyarylate resin and the polycarbonate resin, for example, a combination of a polyarylate resin having at least one of a dicarboxylic acid unit (A2-3) or a diol unit (B7-1) and a polycarbonate resin having a constitutional unit (Cb7-1) is particularly preferable.

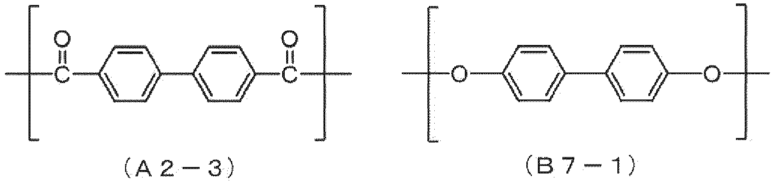

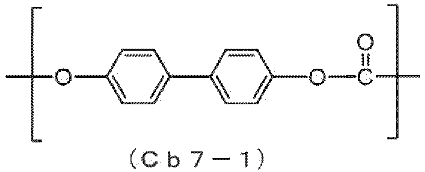

Examples of the phenolic compound contained in the outermost surface layer include phenol, cresol, catechol, resorcinol, hydroquinone, naphthol, and bisphenol (bisphenol A, AP, AF, B, BP, C, C2, E, F, G, M, S, P, PH, TMC, and Z). The phenolic compound may be used alone or in combination of two or more kinds thereof.

Examples of the phenolic compound contained in the outermost surface layer also include a hindered phenolic compound. From the viewpoint of suppressing oxidative deterioration of the outermost surface layer, the phenolic compound contained in the outermost surface layer preferably includes, for example, a hindered phenolic compound. The hindered phenolic compound is generally a compound in which at least one of ortho positions of a hydroxy group of phenol is substituted with a bulky group, and exhibition of an oxidation inhibiting action of the composition is shown.

Examples of the hindered phenolic compound include the following.
· Alkylated monophenol compound and derivative thereof: for example, 2,6-di-t-butyl-4-methylphenol, 2,6-di-t-butyl-4-ethylphenol, octyl-3,5-di-t-butyl-4-hydroxy-hydrocinnamate
· Alkylated hydroquinone compound and a derivative thereof: for example, 2,5-di-t-butylhydroquinone, 2,5-di-t-amylhydroquinone
· Alkyl thiomethyl phenol compound and a derivative thereof: for example, 2,4-dioctylthiomethyl-6-t-butylphenol, 2,4-dioctylthiomethyl-6-methylphenol, 2,4-dioctylthiomethyl-6-ethylphenol, and 2,6-didodecylthiomethyl-4-nonylphenol
· Alkylidene bisphenol compound and derivative thereof: for example, 4,4'-butylidenebis(6-t-butyl-3-methylphenol), 2,2'-methylenebis(6-t-butyl-4-methylphenol), 2,2'-methylenebis(6-t-butyl-4-ethylphenol), 2-t-butyl-6-(3-t-butyl-2-hydroxy-5-methylbenzyl)-4-methylphenyl acrylate, and 3,9-bis[2-[3-(3-t-butyl-4-hydroxy-5-methylphenyl)propionyloxy]-1,1-dimethylethyl]-2,4,8,10-tetraoxaspiro[5.5]undecane

Examples of a commercially available product of the hindered phenolic compound include "ADEKA STAB AO-80", "ADEKA STAB AO-60", "ADEKA STAB AO-50", "ADEKA STAB AO-40", "ADEKA STAB AO-30", "ADEKA STAB AO-20", "ADEKA STAB AO-330" (all manufactured by ADEKA Corporation), "Irganox 1010", "Irganox 245", "Irganox 1076", "Irganox 1520" (all manufactured by BASF Japan Ltd.), and "Sumilizer GA-80", "Sumilizer GM", and "Sumilizer GS" (all manufactured by Sumitomo Chemical Co., Ltd.).

The hindered phenolic compound may be used alone or in combination of two or more kinds thereof.

From the viewpoint of promoting phase separation of two or more kinds of resins during the formation of the outermost surface layer and forming a fine phase separation structure in the outermost surface layer, a content of the phenolic compound contained in the outermost surface layer is, for example, preferably 0.1% by mass or more and 20% by mass or less, more preferably 0.5% by mass or more and 10% by mass or less, and still more preferably 1% by mass or more and 5% by mass or less with respect to a total mass of the outermost surface layer.

In the outermost surface layer of the photoreceptor, for example, a proportion of the fluororesin particles in the layer is preferably 5% by mass or less, more preferably 1% by mass or less, and still more preferably 0% by mass (that is, the outermost surface layer does not contain the fluororesin particles).

Since there is a high possibility that the regulations on manufacturing and use of the organic fluorine compounds are strengthened in the future, for example, a content of the fluororesin particles is preferably within the above-described range.

A layer thickness of the outermost surface layer may be set according to a function of the layer.

In a case where the charge transport layer is the outermost surface layer, the layer thickness of the outermost surface layer is, for example, preferably 5 µm or more and 50 µm or less, more preferably 8 µm or more and 40 µm or less, and still more preferably 10 µm or more and 30 µm or less.

In a case where the single layer-type photosensitive layer is the outermost surface layer, the layer thickness of the outermost surface layer is, for example, preferably 5 µm or more and 50 µm or less, more preferably 8 µm or more and 45 µm or less, and still more preferably 10 µm or more and 40 µm or less.

A method of forming the outermost surface layer is the same as a method of forming the charge transport layer and a method of forming the single layer-type photosensitive layer, which will be described later.

### [Polyarylate Resin (PA)]

As the polyarylate resin contained in the outermost surface layer, for example, a polyarylate resin having at least a dicarboxylic acid unit (A) and a diol unit (B) is preferable. In the present disclosure, the polyarylate resin is referred to as a polyarylate resin (PA).

The dicarboxylic acid unit (A) is a constitutional unit represented by Formula (A).

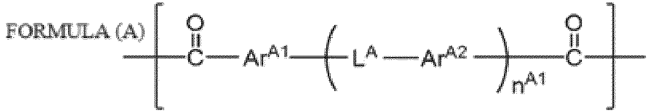

In Formula (A), Ar^{A1} and Ar^{A2} are each independently an aromatic ring which may have a substituent, L^{A} is a single bond or a divalent linking group, and n^{A1} is 0, 1, or 2.

The aromatic ring as Ar^{A1} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{A1} may be substituted with an alkyl group, an aryl group, an aralkyl group, an alkoxy group, an aryloxy group, a halogen atom, or the like. As the substituent in a case where the aromatic ring as Ar^{A1} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as Ar^{A2} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{A2} may be substituted with an alkyl group, an aryl group, an aralkyl group, an alkoxy group, an aryloxy group, a halogen atom, or the like. As the substituent in a case where the aromatic ring as Ar^{A2} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

In a case where L^{A} is a divalent linking group, examples of the divalent linking group include an oxygen atom, a sulfur atom, and -C(Ra¹)(Ra²)-. Here, Ra¹ and Ra² are each independently a hydrogen atom, an alkyl group having 1 or more and 10 or less carbon atoms, an aryl group having 6 or more and 12 or less carbon atoms, or an aralkyl group having 7 or more and 20 or less carbon atoms, and Ra¹ and Ra² may be bonded to each other to form a cyclic alkyl group.

The alkyl group having 1 or more and 10 or less carbon atoms, as Ra¹ and Ra², may be linear, branched, or cyclic. The number of carbon atoms of the alkyl group is, for example, preferably 1 or more and 6 or less, more preferably 1 or more and 4 or less, and still more preferably 1 or 2.

The aryl group having 6 or more and 12 or less carbon atoms, as Ra¹ and Ra², may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as Ra¹ and Ra², may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as Ra¹ and Ra², may be a monocycle or a polycycle. The number of carbon atoms of the aryl group is, for example, preferably 6 or more and 10 or less and more preferably 6.

The dicarboxylic acid unit (A) preferably includes, for example, at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented by Formula (A4), and a dicarboxylic acid unit (A5) represented by Formula (A5). The dicarboxylic acid unit (A) includes, for example, more preferably at least one selected from the group consisting of a dicarboxylic acid unit (A2), a dicarboxylic acid unit (A3), and a dicarboxylic acid unit (A4) and still more preferably a dicarboxylic acid unit (A2).

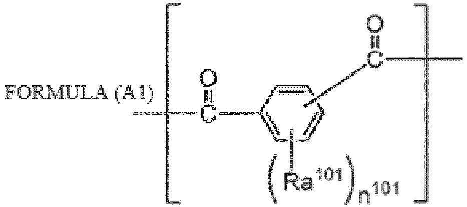

In Formula (A1), n¹⁰¹ is an integer of 0 or greater and 4 or less, and n¹⁰¹ pieces of Ra¹⁰¹'s are each independently an alkyl group having 1 or more and 10 or less carbon atoms, an aryl group having 6 or more and 12 or less carbon atoms, or an alkoxy group having 1 or more and 6 or less carbon atoms.

n¹⁰¹ is, for example, preferably 0, 1, or 2, more preferably 0 or 1, and still more preferably 0.

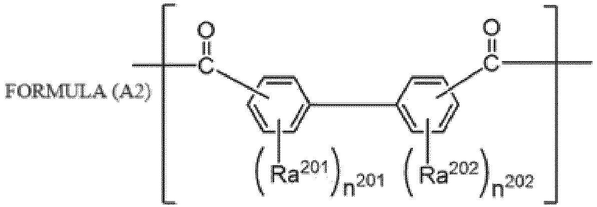

In Formula (A2), n²⁰¹ and n²⁰² are each independently an integer of 0 or greater and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms.

n²⁰¹ represents, for example, preferably 0, 1, or 2, more preferably 0 or 1, and still more preferably 0.

n²⁰² represents, for example, preferably 0, 1, or 2, more preferably 0 or 1, and still more preferably 0.

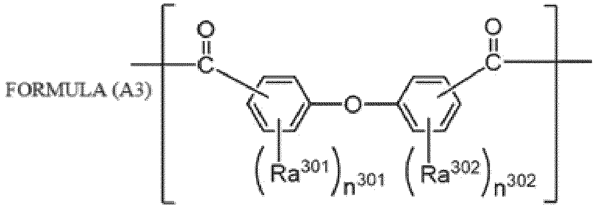

In Formula (A3), n³⁰¹ and n³⁰² are each independently an integer of 0 or greater and 4 or less, and n³⁰¹ pieces of Ra³⁰¹'s and n³⁰² pieces of Ra³⁰²'s are each independently an alkyl group having 1 or more and 10 or less carbon atoms, an aryl group having 6 or more and 12 or less carbon atoms, or an alkoxy group having 1 or more and 6 or less carbon atoms.

n³⁰¹ is, for example, preferably 0, 1, or 2, more preferably 0 or 1, and still more preferably 0.

n³⁰² is, for example, preferably 0, 1, or 2, more preferably 0 or 1, and still more preferably 0.

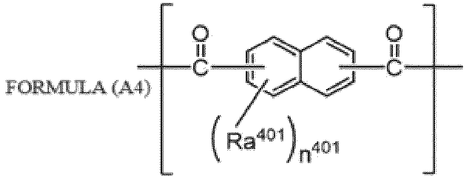

In Formula (A4), n⁴⁰¹ is an integer of 0 or greater and 6 or less, and n⁴⁰¹ pieces of Ra⁴⁰¹'s are each independently an alkyl group having 1 or more and 10 or less carbon atoms, an aryl group having 6 or more and 12 or less carbon atoms, or an alkoxy group having 1 or more and 6 or less carbon atoms.

n⁴⁰¹ represents, for example, preferably an integer of 0 or greater and 4 or less, more preferably 0, 1, or 2, and still more preferably 0.

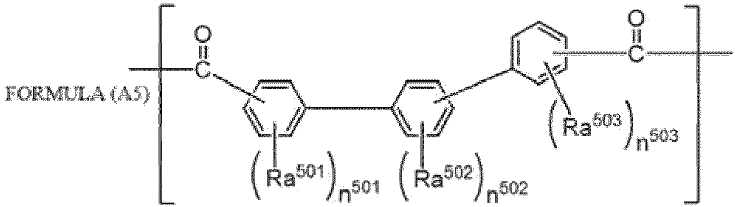

In Formula (A5), n⁵⁰¹, n⁵⁰², and n⁵⁰³ are each independently an integer of 0 or greater and 4 or less, and n⁵⁰¹ pieces of Ra⁵⁰¹'s, n⁵⁰² pieces of Ra⁵⁰²'s, and n⁵⁰³ pieces of Ra⁵⁰³'s are each independently an alkyl group having 1 or more and 10 or less carbon atoms, an aryl group having 6 or more and 12 or less carbon atoms, or an alkoxy group having 1 or more and 6 or less carbon atoms.

n⁵⁰¹ represents, for example, preferably 0, 1, or 2, more preferably 0 or 1, and still more preferably 0.

n⁵⁰² represents, for example, preferably 0, 1, or 2, more preferably 0 or 1, and still more preferably 0.

n⁵⁰³ represents, for example, preferably 0, 1, or 2, more preferably 0 or 1, and still more preferably 0.

The specific forms and the preferable forms of Ra¹⁰¹ in Formula (A1), Ra²⁰¹ and Ra²⁰² in Formula (A2), Ra³⁰¹ and Ra³⁰² in Formula (A3), Ra⁴⁰¹ in Formula (A4), and Ra⁵⁰¹, Ra⁵⁰², and Ra⁵⁰³ in Formula (A5) are the same as each other, and hereinafter, Ra¹⁰¹, Ra²⁰¹, Ra²⁰², Ra³⁰¹, Ra³⁰², Ra⁴⁰¹, Ra⁵⁰¹, Ra⁵⁰², and Ra⁵⁰³ will be collectively referred to as "Ra".

The alkyl group having 1 or more and 10 or less carbon atoms as Ra may be linear, branched, or cyclic. The number of carbon atoms of the alkyl group is, for example, preferably 1 or more and 6 or less, more preferably 1 or more and 4 or less, and still more preferably 1 or 2.

Examples of the linear alkyl group having 1 or more and 10 or less carbon atoms include a methyl group, an ethyl group, a n-propyl group, a n-butyl group, a n-pentyl group, a n-hexyl group, a n-heptyl group, a n-octyl group, a n-nonyl group, and a n-decyl group.

Examples of the branched alkyl group having 3 or more and 10 or less carbon atoms include an isopropyl group, an isobutyl group, an sec-butyl group, a tert-butyl group, an isopentyl group, a neopentyl group, a tert-pentyl group, an isohexyl group, an sec-hexyl group, a tert-hexyl group, an isoheptyl group, an sec-heptyl group, a tert-heptyl group, an isooctyl group, an sec-octyl group, a tert-octyl group, an isononyl group, an sec-nonyl group, a tert-nonyl group, an isodecyl group, an sec-decyl group, and a tert-decyl group.

Examples of the cyclic alkyl group having 3 or more and 10 or less carbon atoms include a cyclopropyl group, a cyclobutyl group, a cyclopentyl group, a cyclohexyl group, a cycloheptyl group, a cyclooctyl group, a cyclononyl group, a cyclodecyl group, and polycyclic (for example, bicyclic, tricyclic, or spirocyclic) alkyl groups to which these monocyclic alkyl groups are linked.

The aryl group having 6 or more and 12 or less carbon atoms as Ra may be a monocycle or a polycycle. The number of carbon atoms of the aryl group is, for example, preferably 6 or more and 10 or less and more preferably 6.

Examples of the aryl group having 6 or more and 12 or less carbon atoms include a phenyl group, a biphenyl group, a 1-naphthyl group, and a 2-naphthyl group.

The alkyl group in the alkoxy group having 1 or more and 6 or less carbon atoms as Ra may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Hereinafter, dicarboxylic acid units (A1-1) to (A1-9) are shown as specific examples of the dicarboxylic acid unit (A1). The dicarboxylic acid unit (A1) is not limited thereto.

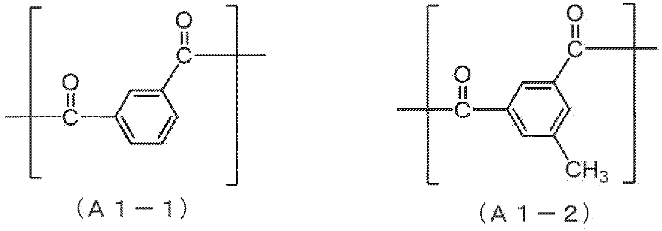

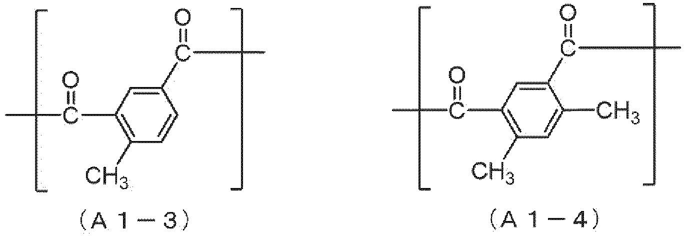

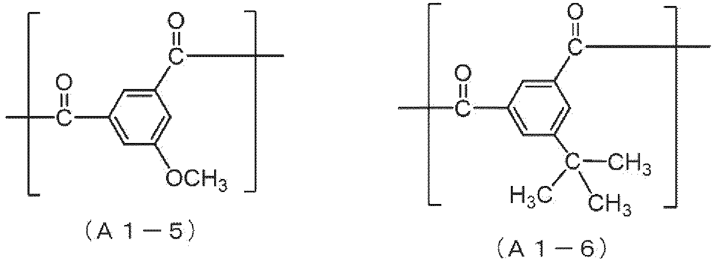

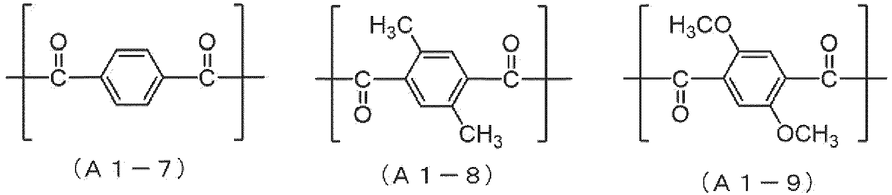

Hereinafter, dicarboxylic acid units (A2-1) to (A2-3) are shown as specific examples of the dicarboxylic acid unit (A2). The dicarboxylic acid unit (A2) is not limited thereto.

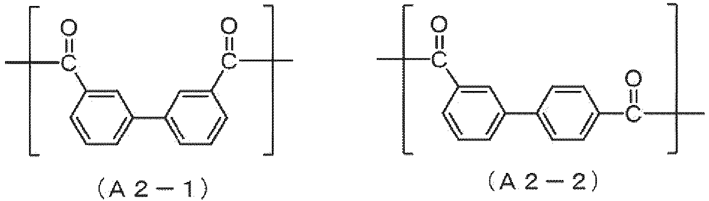

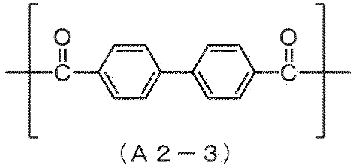

Hereinafter, dicarboxylic acid units (A3-1) and (A3-2) are shown as specific examples of the dicarboxylic acid unit (A3). The dicarboxylic acid unit (A3) is not limited thereto.

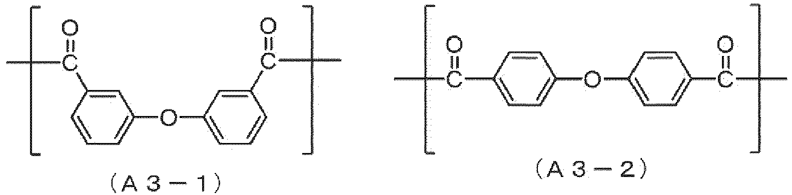

Hereinafter, dicarboxylic acid units (A4-1) to (A4-3) are shown as specific examples of the dicarboxylic acid unit (A4). The dicarboxylic acid unit (A4) is not limited thereto.

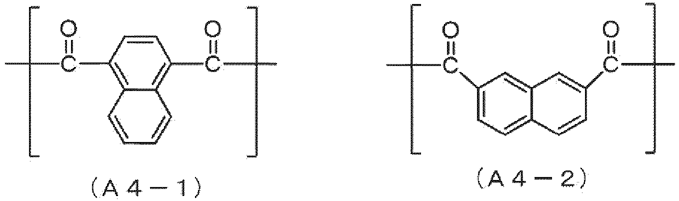

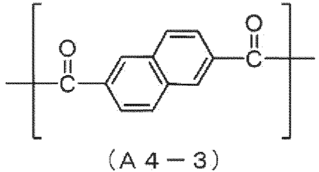

Hereinafter, dicarboxylic acid units (A5-1) to (A5-4) are shown as specific examples of the dicarboxylic acid unit (A5). The dicarboxylic acid unit (A5) is not limited thereto.

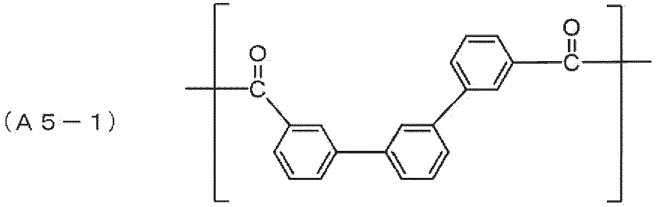

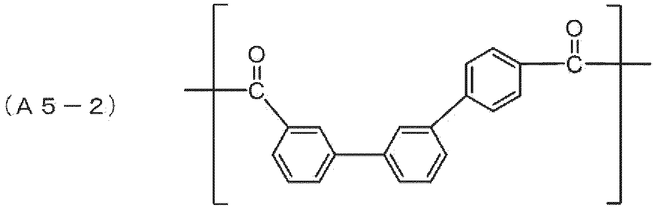

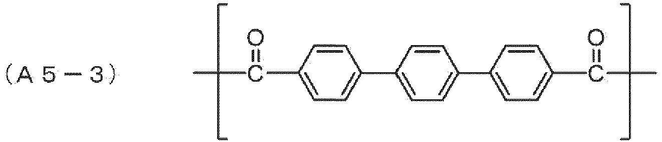

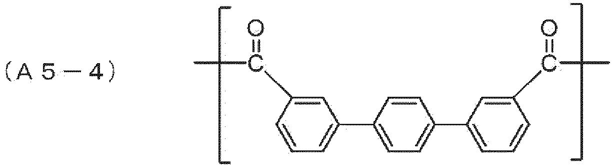

In the above-described specific examples, for example, at least one selected from the group consisting of (A1-1), (A1-7), (A2-3), (A3-2), and (A4-3) is preferably included, at least one selected from the group consisting of (A2-3), (A3-2), and (A4-3) is more preferably included, and at least (A2-3) is still more preferably included as the dicarboxylic acid unit (A).

The dicarboxylic acid unit (A) included in the polyarylate resin (PA) may be used alone or in combination of two or more kinds thereof.

A mass proportion of the dicarboxylic acid unit (A) in the polyarylate resin (PA) is, for example, preferably 15% by mass or more and 60% by mass or less.

In a case where the mass proportion of the dicarboxylic acid unit (A) is 15% by mass or more, the abrasion resistance of the outermost surface layer is enhanced. From the viewpoint, the mass proportion of the dicarboxylic acid unit (A) is, for example, more preferably 20% by mass or more, and still more preferably 25% by mass or more.

In a case where the mass proportion of the dicarboxylic acid unit (A) is 60% by mass or less, peeling of the outermost surface layer can be suppressed. From the viewpoint, the mass proportion of the dicarboxylic acid unit (A) is, for example, more preferably 55% by mass or less, and still more preferably 50% by mass or less.

The polyarylate resin (PA) may have other dicarboxylic acid units in addition to the dicarboxylic acid unit (A). Examples of other dicarboxylic acid units include aliphatic dicarboxylic acids (such as oxalic acid, malonic acid, maleic acid, fumaric acid, citraconic acid, itaconic acid, glutaconic acid, succinic acid, alkenyl succinic acid, adipic acid, and sebacic acid) units, alicyclic dicarboxylic acid (such as cyclohexanedicarboxylic acid) units, and lower alkyl ester units (for example, having 1 or more and 5 or less carbon atoms) thereof. The dicarboxylic acid units included in the polyarylate resin (PA) may be used alone or in combination of two or more kinds thereof.

The diol unit (B) is a constitutional unit represented by Formula (B).

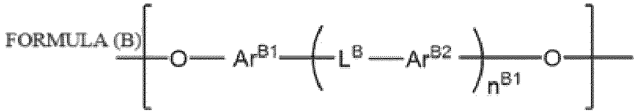

In Formula (B), Ar^{B1} and Ar^{B2} are each independently an aromatic ring which may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

The aromatic ring as Ar^{B1} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{B1} may be substituted with an alkyl group, an aryl group, an aralkyl group, an alkoxy group, an aryloxy group, a halogen atom, or the like. As the substituent in a case where the aromatic ring as Ar^{B1} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as Ar^{B2} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{B2} may be substituted with an alkyl group, an aryl group, an aralkyl group, an alkoxy group, an aryloxy group, a halogen atom, or the like. As the substituent in a case where the aromatic ring as Ar^{B2} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The alkyl group having 1 or more and 20 or less carbon atoms, as Rb¹ and Rb², may be linear, branched, or cyclic. The number of carbon atoms of the alkyl group is, for example, preferably 1 or more and 18 or less, more preferably 1 or more and 14 or less, and still more preferably 1 or more and 10 or less.

The aryl group having 6 or more and 12 or less carbon atoms, as Rb¹ and Rb², may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as Rb¹ and Rb², may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as Rb¹ and Rb², may be a monocycle or a polycycle. The number of carbon atoms of the aryl group is, for example, preferably 6 or more and 10 or less and more preferably 6.

It is preferable that the diol unit (B) includes, for example, at least one selected from the group consisting of a diol unit (B 1) represented by Formula (B 1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).

For example, the diol unit (B) more preferably includes at least one selected from the group consisting of the diol unit (B1) represented by Formula (B1), the diol unit (B2) represented by Formula (B2), the diol unit (B4) represented by Formula (B4), the diol unit (B5) represented by Formula (B5), and the diol unit (B6) represented by Formula (B6);
still more preferably includes at least one selected from the group consisting of the diol unit (B 1) represented by Formula (B 1), the diol unit (B2) represented by Formula (B2), the diol unit (B5) represented by Formula (B5), and the diol unit (B6) represented by Formula (B6);
even more preferably at least one selected from the group consisting of the diol unit (B1) represented by Formula (B1), the diol unit (B2) represented by Formula (B2), and the diol unit (B6) represented by Formula (B6); and
most preferably at least one selected from the group consisting of the diol unit (B 1) represented by Formula (B1) and the diol unit (B2) represented by Formula (B2).

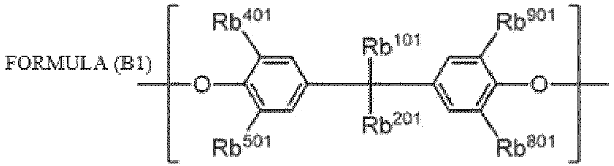

In Formula (B1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom.

The number of carbon atoms in the branched alkyl group having 4 or more and 20 or less carbon atoms, as Rb¹⁰¹, is, for example, preferably 4 or more and 16 or less, more preferably 4 or more and 12 or less, and still more preferably 4 or more and 8 or less. Specific examples of Rb¹⁰¹ include an isobutyl group, an sec-butyl group, a tert-butyl group, an isopentyl group, a neopentyl group, a tert-pentyl group, an isohexyl group, an sec-hexyl group, a tert-hexyl group, an isoheptyl group, an sec-heptyl group, a tert-heptyl group, an isooctyl group, an sec-octyl group, a tert-octyl group, an isononyl group, an sec-nonyl group, a tert-nonyl group, an isodecyl group, an sec-decyl group, a tert-decyl group, an isododecyl group, an sec-dodecyl group, a tert-dodecyl group, a tert-tetradecyl group, and a tert-pentadecyl group.

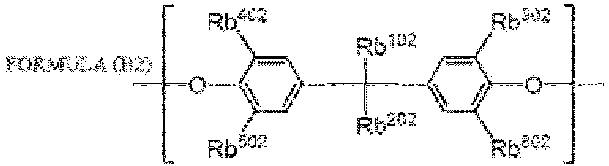

In Formula (B2), Rb¹⁰² is a linear alkyl group having 4 or more and 20 or less carbon atoms, Rb²⁰² is a hydrogen atom or an alkyl group having 1 or more and 3 or less carbon atoms, and Rb⁴⁰², Rb⁵⁰², Rb⁸⁰², and Rb⁹⁰² are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 4 or more and 20 or less carbon atoms, as Rb¹⁰², is, for example, preferably 4 or more and 16 or less, more preferably 4 or more and 12 or less, and still more preferably 4 or more and 8 or less. Specific examples of Rb¹⁰² include an n-butyl group, an n-pentyl group, an n-hexyl group, an n-heptyl group, an n-octyl group, an n-nonyl group, an n-decyl group, an n-undecyl group, an n-dodecyl group, a tridecyl group, an n-tetradecyl group, an n-pentadecyl group, an n-heptadecyl group, an n-octadecyl group, an n-nonadecyl group, and an n-icosyl group.

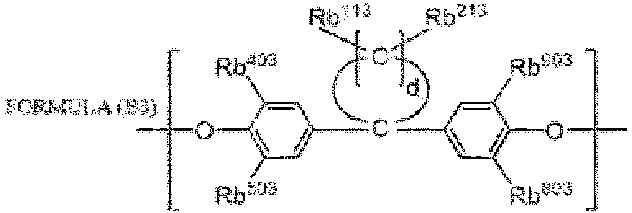

In Formula (B3), Rb¹¹³ and Rb²¹³ are each independently a hydrogen atom, a linear alkyl group having 1 or more and 3 or less carbon atoms, an alkoxy group having 1 or more and 4 or less carbon atoms, or a halogen atom, d is an integer of 7 or greater and 15 or less, and Rb⁴⁰³, Rb⁵⁰³, Rb⁸⁰³, and Rb⁹⁰³ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as Rb¹¹³ and Rb²¹³, is, for example, preferably 1 or 2 and more preferably 1. Specific examples of such a group include a methyl group, an ethyl group, and an n-propyl group.

An alkyl group of the alkoxy group having 1 or more and 4 or less carbon atoms, as Rb¹¹³ and Rb²¹³, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, an n-propoxy group, an n-butoxy group, an isopropoxy group, an isobutoxy group, an sec-butoxy group, a tert-butoxy group, a cyclopropoxy group, and a cyclobutoxy group.

Examples of the halogen atom as Rb¹¹³ and Rb²¹³ include a fluorine atom, a chlorine atom, a bromine atom, and an iodine atom.

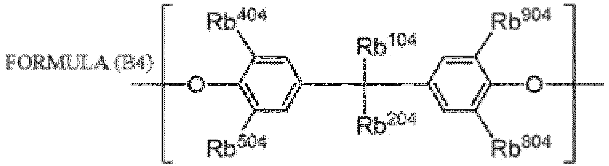

In Formula (B4), Rb¹⁰⁴ and Rb²⁰⁴ are each independently a hydrogen atom or an alkyl group having 1 or more and 3 or less carbon atoms, and Rb⁴⁰⁴, Rb⁵⁰⁴, Rb⁸⁰⁴, and Rb⁹⁰⁴ are each independently a hydrogen atom, an alkyl group having 1 or more and 4 or less carbon atoms, an alkoxy group having 1 or more and 6 or less carbon atoms, or a halogen atom.

The alkyl group having 1 or more and 3 or less carbon atoms, as Rb¹⁰⁴, may be linear, branched, or cyclic. The number of carbon atoms in the alkyl group is, for example, preferably 1 or 2 and more preferably 1. Specific examples of Rb¹⁰⁴ include a methyl group, an ethyl group, an n-propyl group, an isopropyl group, and a cyclopropyl group.

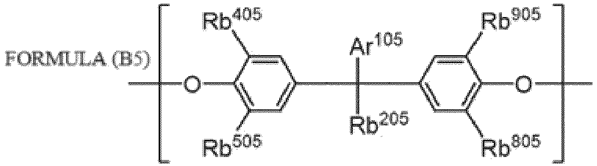

In Formula (B5), Ar¹⁰⁵ is an aryl group having 6 or more and 12 or less carbon atoms or an aralkyl group having 7 or more and 20 or less carbon atoms, Rb²⁰⁵ is a hydrogen atom or an alkyl group having 1 or more and 3 or less carbon atoms, and Rb⁴⁰⁵, Rb⁵⁰⁵, Rb⁸⁰⁵, and Rb⁹⁰⁵ are each independently a hydrogen atom, an alkyl group having 1 or more and 4 or less carbon atoms, an alkoxy group having 1 or more and 6 or less carbon atoms, or a halogen atom.

The aryl group having 6 or more and 12 or less carbon atoms, as Ar¹⁰⁵, may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as Ar¹⁰⁵, may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2. An aryl group of the aralkyl group having 7 or more and 20 or less carbon atoms, as Ar¹⁰⁵, may be a monocycle or a polycycle. The number of carbon atoms of the aryl group is, for example, preferably 6 or more and 10 or less and more preferably 6. Examples of the aralkyl group having 7 or more and 20 or less carbon atoms include a benzyl group, a phenylethyl group, a phenylpropyl group, a 4-phenylbutyl group, a phenylpentyl group, a phenylhexyl group, a phenylheptyl group, a phenyloctyl group, a phenylnonyl group, a naphthylmethyl group, a naphthylethyl group, an anthracenylmethyl group, and a phenyl-cyclopentylmethyl group.

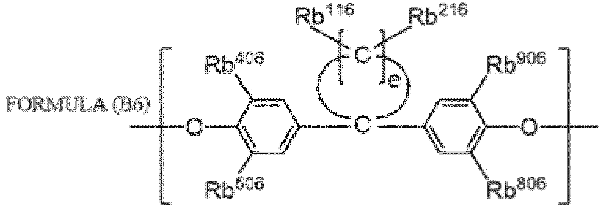

In Formula (B6), Rb¹¹⁶ and Rb²¹⁶ are each independently a hydrogen atom, a linear alkyl group having 1 or more and 3 or less carbon atoms, an alkoxy group having 1 or more and 4 or less carbon atoms, or a halogen atom, e is an integer of 4 or greater and 6 or less, and Rb⁴⁰⁶, Rb⁵⁰⁶, Rb⁸⁰⁶, and Rb⁹⁰⁶ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as Rb¹¹⁶ and Rb²¹⁶, is, for example, preferably 1 or 2 and more preferably 1. Specific examples of such a group include a methyl group, an ethyl group, and an n-propyl group.

An alkyl group of the alkoxy group having 1 or more and 4 or less carbon atoms, as Rb¹¹⁶ and Rb²¹⁶, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, an n-propoxy group, an n-butoxy group, an isopropoxy group, an isobutoxy group, an sec-butoxy group, a tert-butoxy group, a cyclopropoxy group, and a cyclobutoxy group.

Examples of the halogen atom as Rb¹¹⁶ and Rb²¹⁶ include a fluorine atom, a chlorine atom, a bromine atom, and an iodine atom.

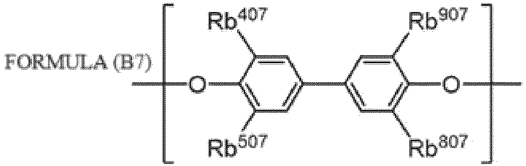

In Formula (B7), Rb⁴⁰⁷, Rb⁵⁰⁷, Rb⁸⁰⁷, and Rb⁹⁰⁷ are each independently a hydrogen atom, an alkyl group having 1 or more and 4 or less carbon atoms, an alkoxy group having 1 or more and 6 or less carbon atoms, or a halogen atom.

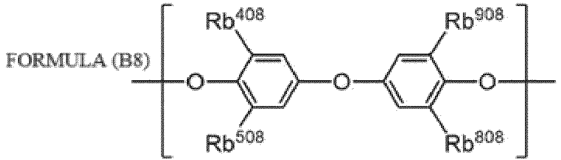

In Formula (B8), Rb⁴⁰⁸, Rb⁵⁰⁸, Rb⁸⁰⁸, and Rb⁹⁰⁸ are each independently a hydrogen atom, an alkyl group having 1 or more and 4 or less carbon atoms, an alkoxy group having 1 or more and 6 or less carbon atoms, or a halogen atom.

Specific forms and preferred forms of Rb²⁰¹ in Formula (B1), Rb²⁰² in Formula (B2), Rb²⁰⁴ in Formula (B4), and Rb²⁰⁵ in Formula (B5) are the same as each other, so that Rb²⁰¹, Rb²⁰², Rb²⁰⁴, and Rb²⁰⁵ will be collectively referred to as "Rb²⁰⁰".

The alkyl group having 1 or more and 3 or less carbon atoms, as Rb²⁰⁰, may be linear, branched, or cyclic. The number of carbon atoms in the alkyl group is, for example, preferably 1 or 2 and more preferably 1.

Examples of the alkyl group having 1 or more and 3 or less carbon atoms include a methyl group, an ethyl group, an n-propyl group, an isopropyl group, and a cyclopropyl group.

Specific forms and preferred forms of Rb⁴⁰¹ in Formula (B1), Rb⁴⁰² in Formula (B2), Rb⁴⁰³ in Formula (B3), Rb⁴⁰⁴ in Formula (B4), Rb⁴⁰⁵ in Formula (B5), Rb⁴⁰⁶ in Formula (B6), Rb⁴⁰⁷ in Formula (B7), and Rb⁴⁰⁸ in Formula (B8) are the same as each other, so that Rb⁴⁰¹, Rb⁴⁰², Rb⁴⁰³, Rb⁴⁰⁴, Rb⁴⁰⁵, Rb⁴⁰⁶, Rb⁴⁰⁷, and Rb⁴⁰⁸ will be collectively referred to as "Rb⁴⁰⁰".

The alkyl group having 1 or more and 4 or less carbon atoms, as Rb⁴⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁴⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁴⁰⁰ include a fluorine atom, a chlorine atom, a bromine atom, and an iodine atom.

Specific forms and preferred forms of Rb⁵⁰¹ in Formula (B1), Rb⁵⁰² in Formula (B2), Rb⁵⁰³ in Formula (B3), Rb⁵⁰⁴ in Formula (B4), Rb⁵⁰⁵ in Formula (B5), Rb⁵⁰⁶ in Formula (B6), Rb⁵⁰⁷ in Formula (B7), and Rb⁵⁰⁸ in Formula (B8) are the same as each other, so that Rb⁵⁰¹, Rb⁵⁰², Rb⁵⁰³, Rb⁵⁰⁴, Rb⁵⁰⁵, Rb⁵⁰⁶, Rb⁵⁰⁷, and Rb⁵⁰⁸ will be collectively referred to as "Rb⁵⁰⁰"*.*

The alkyl group having 1 or more and 4 or less carbon atoms, as Rb⁵⁰⁰*,* may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁵⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁵⁰⁰ include a fluorine atom, a chlorine atom, a bromine atom, and an iodine atom.

Specific forms and preferred forms of Rb⁸⁰¹ in Formula (B1), Rb⁸⁰² in Formula (B2), Rb⁸⁰³ in Formula (B3), Rb⁸⁰⁴ in Formula (B4), Rb⁸⁰⁵ in Formula (B5), Rb⁸⁰⁶ in Formula (B6), Rb⁸⁰⁷ in Formula (B7), and Rb⁸⁰⁸ in Formula (B8) are the same as each other, so that Rb⁸⁰¹, Rb⁸⁰², Rb⁸⁰³, Rb⁸⁰⁴, Rb⁸⁰⁵, Rb⁸⁰⁶, Rb⁸⁰⁷, and Rb⁸⁰⁸ will be collectively referred to as "Rb⁸⁰⁰".

The alkyl group having 1 or more and 4 or less carbon atoms, as Rb⁸⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁸⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁸⁰⁰ include a fluorine atom, a chlorine atom, a bromine atom, and an iodine atom.

Specific forms and preferred forms of Rb⁹⁰¹ in Formula (B1), Rb⁹⁰² in Formula (B2), Rb⁹⁰³ in Formula (B3), Rb⁹⁰⁴ in Formula (B4), Rb⁹⁰⁵ in Formula (B5), Rb⁹⁰⁶ in Formula (B6), Rb⁹⁰⁷ in Formula (B7), and Rb⁹⁰⁸ in Formula (B8) are the same as each other, so that Rb⁹⁰¹, Rb⁹⁰², Rb⁹⁰³, Rb⁹⁰⁴, Rb⁹⁰⁵, Rb⁹⁰⁶, Rb⁹⁰⁷, and Rb⁹⁰⁸ will be collectively referred to as "Rb⁹⁰⁰".

The alkyl group having 1 or more and 4 or less carbon atoms, as Rb⁹⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁹⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁹⁰⁰ include a fluorine atom, a chlorine atom, a bromine atom, and an iodine atom.

Hereinafter, diol units (B1-1) to (B 1-6) are shown as specific examples of the diol unit (B1). The diol unit (B1) is not limited thereto.

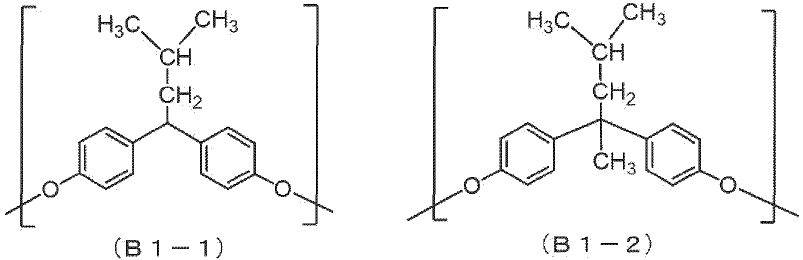

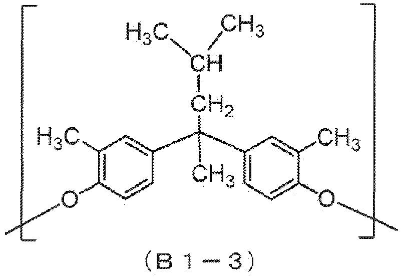

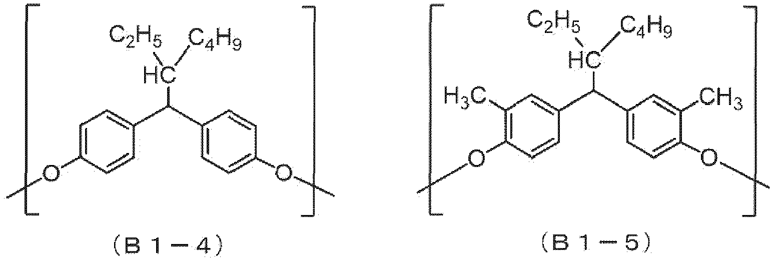

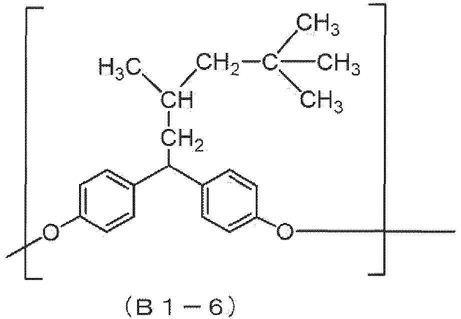

Hereinafter, diol units (B2-1) to (B2-11) are shown as specific examples of the diol unit (B2). The diol unit (B2) is not limited thereto.

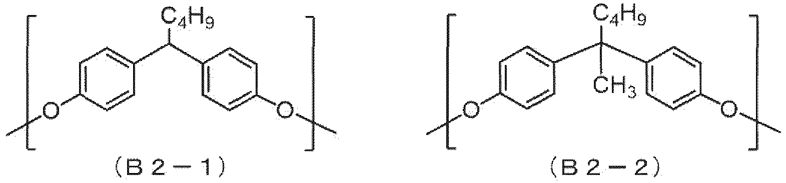

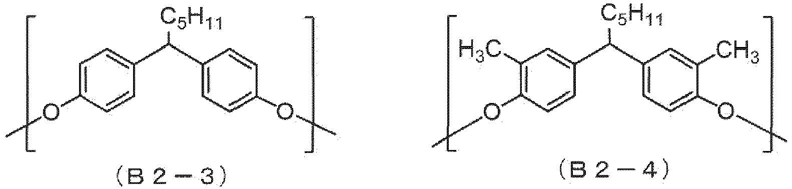

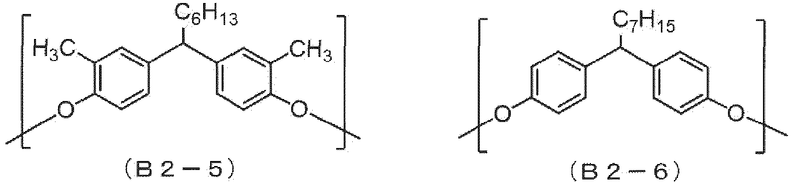

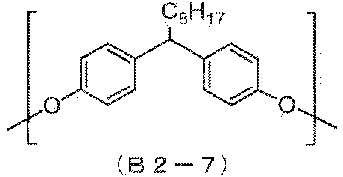

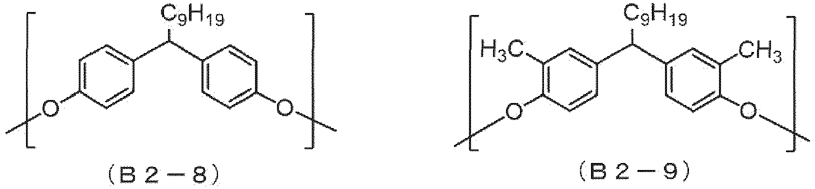

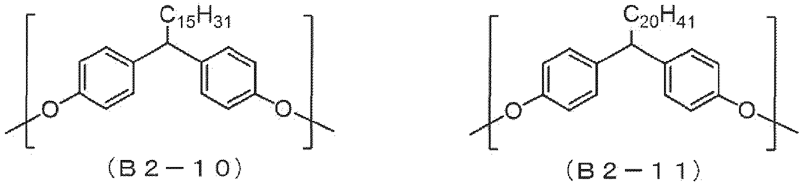

Hereinafter, diol units (B3-1) to (B3-4) are shown as specific examples of the diol unit (B3). The diol unit (B3) is not limited thereto.

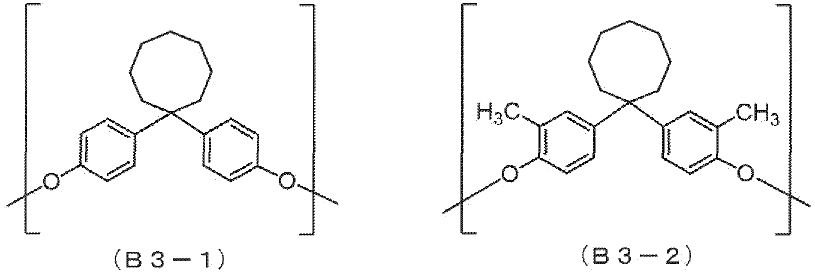

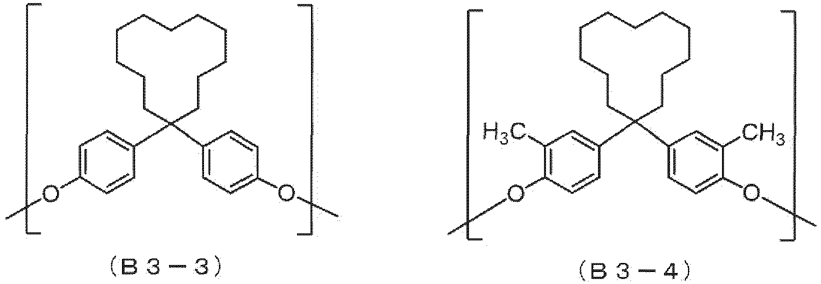

Hereinafter, diol units (B4-1) to (B4-7) are shown as specific examples of the diol unit (B4). The diol unit (B4) is not limited thereto.

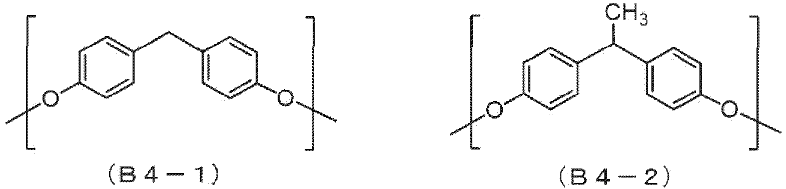

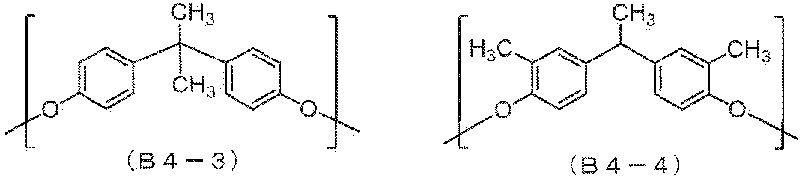

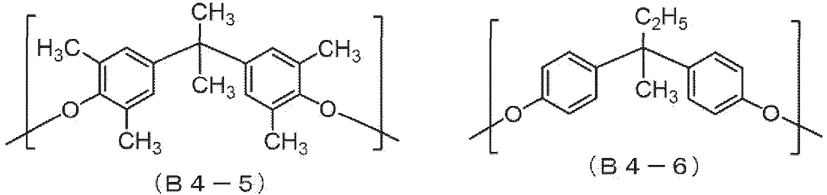

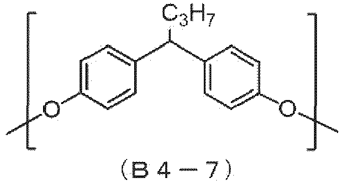

Hereinafter, diol units (B5-1) to (B5-6) are shown as specific examples of the diol unit (B5). The diol unit (B5) is not limited thereto.

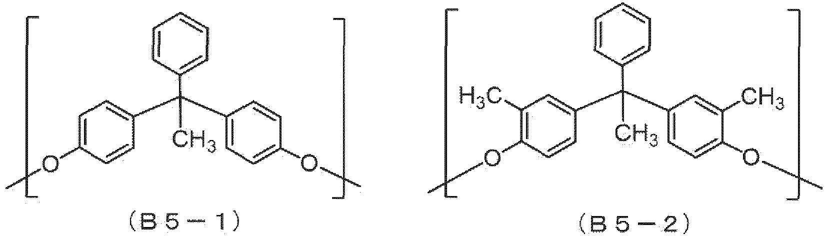

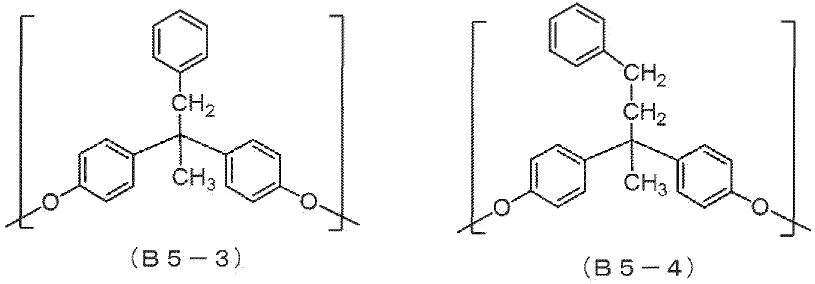

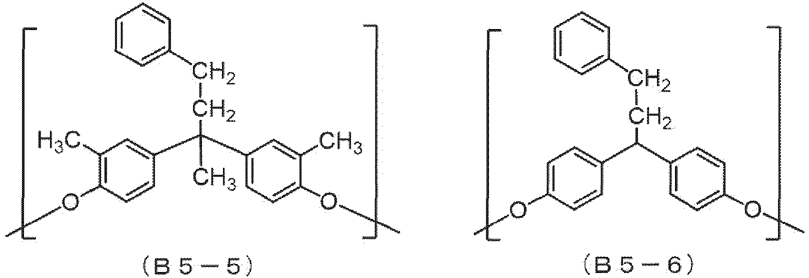

Hereinafter, diol units (B6-1) to (B6-4) are shown as specific examples of the diol unit (B6). The diol unit (B6) is not limited thereto.

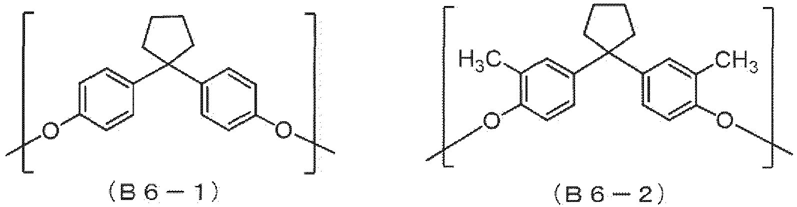

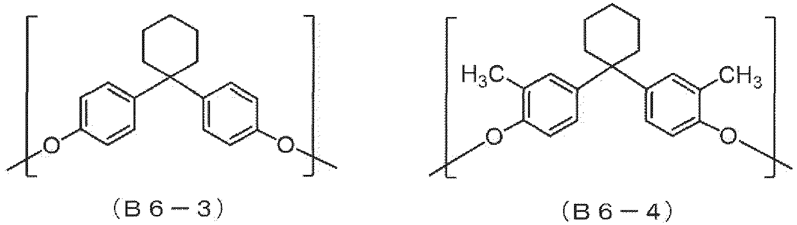

Hereinafter, diol units (B7-1) to (B7-3) are shown as specific examples of the diol unit (B7). The diol unit (B7) is not limited thereto.

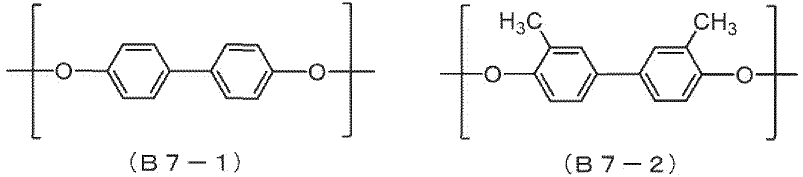

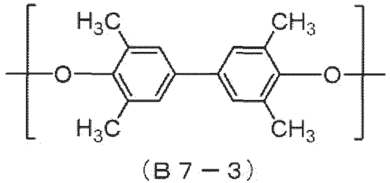

Hereinafter, diol units (B8-1) to (B8-3) are shown as specific examples of the diol unit (B8). The diol unit (B8) is not limited thereto.

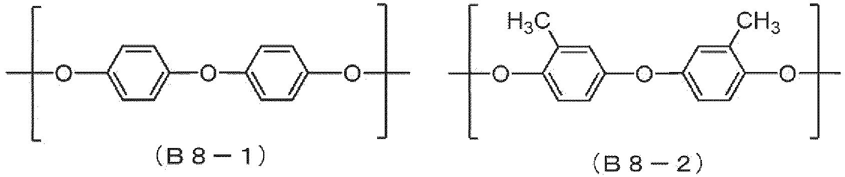

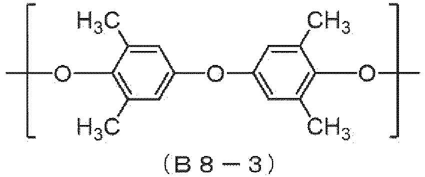

The diol unit (B) included in the polyarylate resin (PA) may be used alone or in combination of two or more kinds thereof.

A mass proportion of the diol unit (B) in the polyarylate resin (PA) is, for example, preferably 25% by mass or more and 80% by mass or less.

In a case where the mass proportion of the diol unit (B) is 25% by mass or greater, peeling of the outermost surface layer can be further suppressed. From the viewpoint, the mass proportion of the diol unit (B) is, for example, more preferably 30% by mass or greater and still more preferably 35% by mass or greater.

In a case where the mass proportion of the diol unit (B) is 80% by mass or less, the solubility in a coating solution for forming the outermost surface layer is maintained, and thus the abrasion resistance can be improved. From the viewpoint, the mass proportion of the diol unit (B) is, for example, more preferably 75% by mass or less and still more preferably 70% by mass or less.

The polyarylate resin (PA) may have other diol units in addition to the diol unit (B). Examples of other diol units include aliphatic diol (such as ethylene glycol, diethylene glycol, triethylene glycol, propylene glycol, butanediol, hexanediol, and neopentyl glycol) units, and alicyclic diol (such as cyclohexanediol, cyclohexanedimethanol, and hydrogenated bisphenol A) units. The diol units included in the polyarylate resin (PA) may be used alone or in combination of two or more kinds thereof.

A terminal of the polyarylate resin (PA) may be sealed or modified with a terminal-sealing agent, a molecular weight modifier, or the like used in a case of the production. Examples of the terminal-sealing agent or the molecular weight modifier include monohydric phenol, monovalent acid chloride, monohydric alcohol, and monovalent carboxylic acid.

Examples of the monohydric phenol include phenol, o-cresol, m-cresol, p-cresol, o-ethylphenol, m-ethylphenol, p-ethylphenol, o-propylphenol, m-propylphenol, p-propylphenol, o-tert-butylphenol, m-tert-butylphenol, p-tert-butylphenol, pentylphenol, hexylphenol, octylphenol, nonylphenol, a 2,6-dimethylphenol derivative, a 2-methylphenol derivative, o-phenylphenol, m-phenylphenol, p-phenylphenol, o-methoxyphenol, m-methoxyphenol, p-methoxyphenol, 2,3,5-trimethylphenol, 2,3,6-trimethylphenol, 2,3-xylenol, 2,4-xylenol, 2,5-xylenol, 2,6-xylenol, 3,4-xylenol, 3,5-xylenol, 2-phenyl-2-(4-hydroxyphenyl)propane, 2-phenyl-2-(2-hydroxyphenyl)propane, and 2-phenyl-2-(3-hydroxyphenyl)propane.

Examples of the monovalent acid chloride include monofunctional acid halides such as benzoyl chloride, benzoic acid chloride, methanesulfonyl chloride, phenylchloroformate, acetic acid chloride, butyric acid chloride, octyl acid chloride, benzenesulfonyl chloride, benzenesulfinyl chloride, sulfinyl chloride, benzene phosphonyl chloride, and substituents thereof.

Examples of the monohydric alcohol include methanol, ethanol, n-propanol, isopropanol, n-butanol, 2-butanol, pentanol, hexanol, dodecyl alcohol, stearyl alcohol, benzyl alcohol, and phenethyl alcohol.

Examples of the monovalent carboxylic acid include acetic acid, propionic acid, octanoic acid, cyclohexanecarboxylic acid, benzoic acid, toluic acid, phenylacetic acid, p-tert-butylbenzoic acid, and p-methoxyphenylacetic acid.

The weight-average molecular weight of the polyarylate resin (PA) is, for example, preferably 30,000 or greater and 300,000 or less, more preferably 40,000 or greater and 250,000 or less, and still more preferably 50,000 or greater and 200,000 or less.

The molecular weight of the polyarylate resin (PA) is a molecular weight in terms of polystyrene measured by gel permeation chromatography (GPC). The GPC is carried out by using tetrahydrofuran as an eluent.

The polyarylate resin (PA) can be obtained by polycondensing a monomer providing the dicarboxylic acid unit (A), a monomer providing the diol unit (B), and other monomers as necessary using a method in the related art. Examples of the method of polycondensing monomers include an interfacial polymerization method, a solution polymerization method, and a melt polymerization method. The interfacial polymerization method is a polymerization method of mixing a divalent carboxylic acid halide dissolved in an organic solvent that is incompatible with water and dihydric alcohol dissolved in an alkali aqueous solution to obtain polyester. Examples of documents related to the interfacial polymerization method include W. M. EARECKSON, J. Poly. Sci., XL399, 1959, and JP1965-1959B (JP-S40-1959B). Since the interfacial polymerization method enables the reaction to proceed faster than the reaction carried out by the solution polymerization method and also enables suppression of hydrolysis of the divalent carboxylic acid halide, as a result, a high-molecular-weight polyarylate resin (PA) can be obtained.

Hereinafter, each layer of the photoreceptor will be described in detail.

### [Conductive Substrate]

Examples of the conductive substrate include metal plates, metal drums, metal belts, or the like, containing a metal (such as aluminum, copper, zinc, chromium, nickel, molybdenum, vanadium, indium, gold, and platinum) or an alloy (such as stainless steel). In addition, examples of the conductive substrate also include paper, a resin film, a belt, or the like, that is obtained by being coated, vapor-deposited, or laminated with a conductive compound (such as a conductive polymer and indium oxide), a metal (such as aluminum, palladium, and gold) or an alloy. Here, the term "conductive" denotes that a volume resistivity is less than 1 × 10¹³ Ω·cm.

In a case where the electrophotographic photoreceptor is used in a laser printer, for example, it is preferable that the surface of the conductive substrate is roughened such that a centerline average roughness Ra thereof is 0.04 µm or greater and 0.5 µm or less for the purpose of suppressing interference fringes from occurring in a case of irradiation with laser beams. In a case where incoherent light is used as a light source, roughening of the surface to prevent interference fringes is not particularly necessary, and it is suitable for longer life because occurrence of defects due to the roughness of the surface of the conductive substrate is suppressed.

Examples of the roughening method include wet honing performed by suspending an abrasive in water and spraying the suspension to the conductive substrate, centerless grinding performed by pressure-welding the conductive substrate against a rotating grindstone and continuously grinding the conductive substrate, and an anodizing treatment.

Examples of the roughening method also include a method of dispersing conductive or semi-conductive powder in a resin without roughening the surface of the conductive substrate to form a layer on the surface of the conductive substrate, and performing roughening using the particles dispersed in the layer.

The roughening treatment performed by anodization is a treatment of forming an oxide film on the surface of the conductive substrate by carrying out anodization in an electrolytic solution using a conductive substrate made of a metal (for example, aluminum) as an anode. Examples of the electrolytic solution include a sulfuric acid solution and an oxalic acid solution. However, a porous anodized film formed by the anodization is chemically active in a natural state, is easily contaminated, and has a large resistance fluctuation depending on the environment. Therefore, for example, it is preferable that a sealing treatment is performed on the porous anodized film so that the fine pores of the oxide film are closed by volume expansion due to a hydration reaction in pressurized steam or boiling water (a metal salt such as nickel may be added thereto) for a change into a more stable a hydrous oxide.

The film thickness of the anodized film is, for example, preferably 0.3 µm or greater and 15 µm or less. In a case where the film thickness is in the above-described range, the barrier properties against injection tend to be exhibited, and an increase in the residual potential due to repeated use tends to be suppressed.

The conductive substrate may be subjected to a treatment with an acidic treatment liquid or a boehmite treatment.

The treatment with an acidic treatment liquid is carried out, for example, as follows. First, an acidic treatment liquid containing phosphoric acid, chromic acid, and hydrofluoric acid is prepared. As a blending proportion of the phosphoric acid, chromic acid, and hydrofluoric acid to the acidic treatment liquid, for example, a concentration of the phosphoric acid may be in a range of 10% by mass or more and 11% by mass or less, a concentration of the chromic acid may be in a range of 3% by mass or more and 5% by mass or less, and a concentration of the hydrofluoric acid may be in a range of 0.5% by mass or more and 2% by mass or less, and a concentration of all of these acids may be in a range of 13.5% by mass or more and 18% by mass or less. A treatment temperature is, for example, preferably 42°C or higher and 48°C or lower. The film thickness of the coating film is, for example, preferably 0.3 µm or greater and 15 µm or less.

The boehmite treatment is carried out, for example, by dipping the conductive substrate in pure water at 90°C or higher and 100°C or lower for 5 minutes to 60 minutes or by bringing the conductive substrate into contact with heated steam at 90°C or higher and 120°C or lower for 5 minutes to 60 minutes. A film thickness of the coating film is, for example, preferably 0.1 µm or more and 5 µm or less. This coating film may be further subjected to the anodizing treatment using an electrolytic solution having low film solubility, such as adipic acid, boric acid, a borate, a phosphate, a phthalate, a maleate, a benzoate, a tartrate, or a citrate.

### [Undercoat Layer]

The undercoat layer is, for example, a layer containing inorganic particles and a binder resin.

Examples of the inorganic particles include inorganic particles having a powder resistance (volume resistivity) of 1 × 10² Ω·cm or more and 1 × 10¹¹ Ω·cm or less.

Among these, as the inorganic particles having the above-described resistance value, for example, metal oxide particles such as tin oxide particles, titanium oxide particles, zinc oxide particles, and zirconium oxide particles may be used, and zinc oxide particles are particularly preferable.

A specific surface area of the inorganic particles, measured by a BET method, may be, for example, 10 m²/g or more.

The volume average particle diameter of the inorganic particles may be, for example, 50 nm or greater and 2,000 nm or less (for example, preferably 60 nm or greater and 1,000 nm or less).

The content of the inorganic particles is, for example, preferably 10% by mass or greater and 80% by mass or less and more preferably 40% by mass or greater and 80% by mass or less with respect to the amount of the binder resin.

The inorganic particles may be subjected to a surface treatment. As the inorganic particles, inorganic particles subjected to different surface treatments or inorganic particles having different particle diameters may be used in the form of a mixture of two or more kinds thereof.

Examples of the surface treatment agent include a silane coupling agent, a titanate-based coupling agent, an aluminum-based coupling agent, and a surfactant. In particular, for example, a silane coupling agent is preferable, and a silane coupling agent containing an amino group is more preferable.

Examples of the silane coupling agent containing an amino group include 3-aminopropyltriethoxysilane, N-2-(aminoethyl)-3-aminopropyltrimethoxysilane, N-2-(aminoethyl)-3-aminopropylmethyldimethoxysilane, and N,N-bis(2-hydroxyethyl)-3-aminopropyltriethoxysilane, but are not limited thereto.

The silane coupling agent may be used in the form of a mixture of two or more kinds thereof. For example, the silane coupling agent having an amino group and other silane coupling agents may be used in combination. Examples of other silane coupling agents include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl)-3-aminopropyltriethoxysilane, and 3-chloropropyltrimethoxysilane, but are not limited thereto.

The surface treatment method using a surface treatment agent may be any method as long as the method is a known method, and any of a dry method or a wet method may be used.

The treatment amount of the surface treatment agent is, for example, preferably 0.5% by mass or greater and 10% by mass or less with respect to the amount of the inorganic particles.

Here, for example, the undercoat layer may contain an electron-accepting compound (acceptor compound) together with the inorganic particles from the viewpoint of enhancing long-term stability of electrical properties and carrier blocking properties.

Examples of the electron-accepting compound include electron-transporting substances such as a compound having an anthraquinone structure; a quinone-based compound such as chloranil and bromanil; a tetracyanoquinodimethane-based compound; a fluorenone compound such as 2,4,7-trinitrofluorenone and 2,4,5,7-tetranitro-9-fluorenone; an oxadiazole-based compound such as 2-(4-biphenyl)-5-(4-t-butylphenyl)-1,3,4-oxadiazole, 2,5-bis(4-naphthyl)-1,3,4-oxadiazole, and 2,5-bis(4-diethylaminophenyl)-1,3,4-oxadiazole; a xanthone-based compound; a thiophene compound; a diphenoquinone compound such as 3,3',5,5'-tetra-t-butyldiphenoquinone; and a benzophenone compound.

In particular, as the electron-accepting compound, for example, a compound having an anthraquinone structure is preferable. As the compound having an anthraquinone structure, for example, a hydroxyanthraquinone compound, an aminoanthraquinone compound, or an aminohydroxyanthraquinone compound is preferable; and specifically, anthraquinone, alizarin, quinizarin, anthrarufin, purpurin, or a derivative thereof is preferable.

The electron-accepting compound may be contained in the undercoat layer in a state of being dispersed with inorganic particles or in a state of being attached to the surface of each inorganic particle.

Examples of the method of attaching the electron-accepting compound to the surface of the inorganic particle include a dry method and a wet method.

The dry method is, for example, a method of attaching the electron-accepting compound to the surface of the inorganic particles by adding the electron-accepting compound dropwise to the inorganic particles directly or by dissolving the electron-accepting compound in an organic solvent while stirring the inorganic particles with a mixer having a large shearing force and spraying the mixture together with dry air or nitrogen gas. For example, the dropwise addition or spraying of the electron-accepting compound may be performed at a temperature equal to or lower than a boiling point of the solvent. After the dropwise addition or spraying of the electron-accepting compound, the mixture may be further baked at 100°C or higher. The baking is not particularly limited as long as the temperature and the time are adjusted such that the electrophotographic characteristics can be obtained.

The wet method is, for example, a method of attaching the electron-accepting compound to the surface of the inorganic particles by adding the electron-accepting compound to inorganic particles while dispersing the inorganic particles in a solvent by performing using a stirrer, an ultrasonic disperser, a sand mill, an attritor, or a ball mill, stirring or dispersing the mixture, and removing the solvent. The solvent removing method is carried out by, for example, filtration or distillation so that the solvent is distilled off. After removal of the solvent, the mixture may be further baked at 100°C or higher. The baking is not particularly limited as long as the temperature and the time are adjusted such that electrophotographic characteristics can be obtained. In the wet method, the moisture contained in the inorganic particles may be removed before the electron-accepting compound is added, and examples thereof include a method of removing the moisture while stirring and heating the moisture in a solvent and a method of removing the moisture by azeotropically boiling the moisture with a solvent.

The electron-accepting compound may be attached to the surface before or after the inorganic particles are subjected to a surface treatment with a surface treatment agent or simultaneously with the surface treatment performed on the inorganic particles with a surface treatment agent.

The content of the electron-accepting compound may be, for example, 0.01% by mass or greater and 20% by mass or less and is preferably 0.01% by mass or greater and 10% by mass or less with respect to the amount of the inorganic particles.

Examples of the binder resin used for the undercoat layer include known polymer compounds such as an acetal resin (such as polyvinyl butyral), a polyvinyl alcohol resin, a polyvinyl acetal resin, a casein resin, a polyamide resin, a cellulose resin, gelatin, a polyurethane resin, a polyester resin, an unsaturated polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a urea resin, a phenol resin, a phenol-formaldehyde resin, a melamine resin, a urethane resin, an alkyd resin, and an epoxy resin, a zirconium chelate compound, a titanium chelate compound, an aluminum chelate compound, a titanium alkoxide compound, an organic titanium compound, and known materials such as a silane coupling agent.

Examples of the binder resin used for the undercoat layer include a charge-transporting resin containing a charge-transporting group, and a conductive resin (such as polyaniline).

Among these, as the binder resin used for the undercoat layer, for example, a resin insoluble in a coating solvent of the upper layer is preferable, and a resin obtained by reaction between a curing agent and at least one resin selected from the group consisting of a thermosetting resin such as a urea resin, a phenol resin, a phenol-formaldehyde resin, a melamine resin, a urethane resin, an unsaturated polyester resin, an alkyd resin, or an epoxy resin; a polyamide resin, a polyester resin, a polyether resin, a methacrylic resin, an acrylic resin, a polyvinyl alcohol resin, and a polyvinyl acetal resin is particularly preferable.

In a case where these binder resins are used in combination of two or more kinds thereof, the mixing ratio thereof is set as necessary.

The undercoat layer may contain various additives for improving the electrical properties, the environmental stability, and the image quality.

Examples of the additive include known materials such as an electron-transporting pigment such as a polycyclic condensed pigment or an azo-based pigment, a zirconium chelate compound, a titanium chelate compound, an aluminum chelate compound, a titanium alkoxide compound, an organic titanium compound, and a silane coupling agent. The silane coupling agent is used for a surface treatment of the inorganic particles as described above, but may be further added to the undercoat layer as an additive.

Examples of the silane coupling agent serving as an additive include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl)-3-aminopropyltriethoxysilane, and 3-chloropropyltrimethoxysilane.

Examples of the zirconium chelate compound include zirconium butoxide, ethyl zirconium acetoacetate, zirconium triethanolamine, acetylacetonate zirconium butoxide, ethyl zirconium butoxide acetoacetate, zirconium acetate, zirconium oxalate, zirconium lactate, zirconium phosphonate, zirconium octanoate, zirconium naphthenate, zirconium laurate, zirconium stearate, zirconium isostearate, zirconium butoxide methacrylate, stearate zirconium butoxide, and isostearate zirconium butoxide.

Examples of the titanium chelate compound include tetraisopropyl titanate, tetranormal butyl titanate, a butyl titanate dimer, tetra(2-ethylhexyl) titanate, titanium acetylacetonate, polytitanium acetylacetonate, titanium octylene glycolate, titanium lactate ammonium salt, titanium lactate, titanium lactate ethyl ester, titanium triethanol aminate, and polyhydroxy titanium stearate.

Examples of the aluminum chelate compound include aluminum isopropylate, monobutoxyaluminum diisopropylate, aluminum butyrate, diethylacetoacetate aluminum diisopropylate, and aluminum tris(ethylacetoacetate).

These additives may be used alone or in the form of a mixture or a polycondensate of a plurality of compounds.

The undercoat layer may have, for example, a Vickers hardness of 35 or greater.

For example, the surface roughness (ten-point average roughness) of the undercoat layer may be adjusted to 1/2 from 1/(4n) (n is a refractive index of an upper layer) of a laser wavelength λ for exposure to be used to suppress moire fringes.

Resin particles or the like may be added to the undercoat layer to adjust the surface roughness. Examples of the resin particles include silicone resin particles and crosslinked polymethyl methacrylate resin particles. In addition, the surface of the undercoat layer may be polished to adjust the surface roughness. Examples of the polishing method include buff polishing, a sandblast treatment, wet honing, and a grinding treatment.

The formation of the undercoat layer is not particularly limited, and a known forming method is used. For example, a coating film of a coating solution for forming an undercoat layer in which the above-described components are added to a solvent is formed, and the coating film is dried and, as necessary, heated.

Examples of the solvent for preparing the coating solution for forming an undercoat layer include known organic solvents such as an alcohol-based solvent, an aromatic hydrocarbon solvent, a halogenated hydrocarbon solvent, a ketone-based solvent, a ketone alcohol-based solvent, an ether-based solvent, and an ester-based solvent.

Specific examples of the solvent include typical organic solvents such as methanol, ethanol, n-propanol, iso-propanol, n-butanol, benzyl alcohol, methyl cellosolve, ethyl cellosolve, acetone, methyl ethyl ketone, cyclohexanone, methyl acetate, ethyl acetate, n-butyl acetate, dioxane, tetrahydrofuran, methylene chloride, chloroform, chlorobenzene, and toluene.

Examples of the method of dispersing the inorganic particles in a case of preparing the coating solution for forming an undercoat layer include known methods such as a roll mill, a ball mill, a vibration ball mill, an attritor, a sand mill, a colloid mill, and a paint shaker.

Examples of the method of coating the conductive substrate with the coating solution for forming an undercoat layer include typical coating methods such as a blade coating method, a wire bar coating method, a spray coating method, a dip coating method, a bead coating method, an air knife coating method, and a curtain coating method.

The layer thickness of the undercoat layer is set to be, for example, preferably 15 µm or greater and more preferably in a range of 20 µm or greater and 50 µm or less.

### [Interlayer]

The interlayer is, for example, a layer containing a resin. Examples of the resin used for the interlayer include polymer compounds such as an acetal resin (for example, polyvinyl butyral or the like), a polyvinyl alcohol resin, a polyvinyl acetal resin, a casein resin, a polyamide resin, a cellulose resin, gelatin, a polyurethane resin, a polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a phenol-formaldehyde resin, and a melamine resin.

The interlayer may be a layer containing an organometallic compound. Examples of the organometallic compound used for the interlayer include organometallic compounds containing a metal atom such as zirconium, titanium, aluminum, manganese, and silicon.

The compounds used for the interlayer may be used alone or in the form of a mixture or a polycondensate of a plurality of compounds.

Among these, it is preferable that the interlayer is, for example, a layer containing an organometallic compound having a zirconium atom or a silicon atom.

The formation of the interlayer is not particularly limited, and a known forming method is used. For example, a coating film of a coating solution for forming an interlayer in which the above-described components are added to a solvent is formed, and the coating film is dried and, as necessary, heated.

Examples of the coating method of forming the interlayer include typical methods such as a dip coating method, a push-up coating method, a wire bar coating method, a spray coating method, a blade coating method, an air knife coating method, and a curtain coating method.

The layer thickness of the interlayer is set to be, for example, preferably in a range of 0.1 µm or greater and 3 µm or less. The interlayer may be used as the undercoat layer.

### [Charge Generation Layer]

A charge generation layer is, for example, a layer containing a charge generation material and a binder resin. In addition, the charge generation layer may be a deposition layer of the charge generation material. For example, the deposition layer of the charge generation material is preferable in a case where an incoherent light source such as a light emitting diode (LED) and an organic electro-luminescence (EL) image array is used.

Examples of the charge generation material include an azo pigment such as bisazo or trisazo; a fused ring aromatic pigment such as dibromoanthanthrone; a perylene pigment; a pyrrolopyrrole pigment; a phthalocyanine pigment; zinc oxide; and trigonal selenium.

Among these, for example, a metal phthalocyanine pigment or a metal-free phthalocyanine pigment is preferably used as the charge generation material in order to deal with laser exposure in a near infrared region. Specifically, for example, hydroxygallium phthalocyanine, chlorogallium phthalocyanine, dichloro-tin phthalocyanine, and titanyl phthalocyanine are more preferable.

On the other hand, for example, a fused ring aromatic pigment such as dibromoanthanthrone, a thioindigo-based pigment, a porphyrazine compound, zinc oxide, trigonal selenium, or a bisazo pigment is preferable as the charge generation material in order to deal with laser exposure in a near ultraviolet region.

The above-described charge generation material may be used even in a case where a non-coherent light source such as an LED having a central wavelength of light emission in a range of 450 nm or more and 780 nm or less and an organic EL image array is used.

In a case where an n-type semiconductor such as a fused ring aromatic pigment, a perylene pigment, or an azo pigment is used as the charge generation material, a dark current is unlikely to be generated, and image defects referred to as black spots can be suppressed even in a case where a thin film is used. The n-type is determined by the polarity of the flowing photocurrent using a typically used time-of-flight method, and a material in which electrons more easily flow as carriers than positive holes is determined as the n-type.

The binder resin used for the charge generation layer is selected from a wide range of insulating resins, and the binder resin may be selected from organic photoconductive polymers such as poly-N-vinylcarbazole, polyvinyl anthracene, polyvinylpyrene, and polysilane.

Examples of the binder resin include a polyvinyl butyral resin, a polyarylate resin (polycondensate of bisphenols and aromatic divalent carboxylic acid, or the like), a polycarbonate resin, a polyester resin, a phenoxy resin, a vinyl chloride-vinyl acetate copolymer, a polyamide resin, an acrylic resin, a polyacrylamide resin, a polyvinylpyridine resin, a cellulose resin, a urethane resin, an epoxy resin, casein, a polyvinyl alcohol resin, and a polyvinylpyrrolidone resin. Here, the term "insulating" means that a volume resistivity is 1 × 10¹³ Ω·cm or more. These binder resins are used alone or in the form of a mixture of two or more kinds thereof.

The blending ratio between the charge generation material and the binder resin is, for example, preferably in a range of 10:1 to 1:10 in terms of the mass ratio.

The charge generation layer may also contain other known additives.

The formation of the charge generation layer is not particularly limited, and a known forming method is used. For example, a coating film of a coating solution for forming a charge generation layer in which the above-described components are added to a solvent is formed, and the coating film is dried and, as necessary, heated. The charge generation layer may be formed by a vapor deposition of the charge generation material. For example, the formation of the charge generation layer by the vapor deposition is particularly preferable in a case where the fused ring aromatic pigment or the perylene pigment is used as the charge generation material.

Examples of the solvent for preparing the coating solution for forming the charge generation layer include methanol, ethanol, n-propanol, n-butanol, benzyl alcohol, methyl cellosolve, ethyl cellosolve, acetone, methyl ethyl ketone, cyclohexanone, methyl acetate, n-butyl acetate, dioxane, tetrahydrofuran, methylene chloride, chloroform, chlorobenzene, and toluene. These solvents are used alone or in the form of a mixture of two or more kinds thereof.

As a method of dispersing particles (for example, the charge generation material) in the coating solution for forming the charge generation layer, for example, a media disperser such as a ball mill, a vibration ball mill, an attritor, a sand mill, and a horizontal sand mill, or a medialess disperser such as a stirrer, an ultrasonic disperser, a roll mill, and a high-pressure homogenizer is used. Examples of the high-pressure homogenizer include a collision type homogenizer in which a dispersion liquid is dispersed by a liquid-liquid collision or a liquid-wall collision in a high-pressure state, and a penetration type homogenizer in which a dispersion liquid is dispersed by penetrating the liquid through a fine flow path in a high-pressure state. During the dispersion, it is effective to set the average particle diameter of the charge generation material in the coating solution for forming a charge generation layer to 0.5 µm or less, for example, preferably 0.3 µm or less, and more preferably 0.15 µm or less.

Examples of the method of coating the undercoat layer (or the interlayer) with the coating solution for forming a charge generation layer include typical methods such as a blade coating method, a wire bar coating method, a spray coating method, a dip coating method, a bead coating method, an air knife coating method, and a curtain coating method.

The layer thickness of the charge generation layer is set to be, for example, preferably in a range of 0.1 µm or greater and 5.0 µm or less and more preferably in a range of 0.2 µm or greater and 2.0 µm or less.

### [Charge Transport Layer]

The charge transport layer is, for example, a layer containing a binder resin and a charge transport material. The charge transport layer may be a layer containing a polymer charge transport material.

Examples of the charge transport material include a quinone-based compound such as p-benzoquinone, chloranil, bromanil, or anthraquinone; a tetracyanoquinodimethane-based compound; a fluorenone compound such as 2,4,7-trinitrofluorenone; a xanthone compound; a benzophenone-based compound; a cyanovinyl-based compound; and an electron-transporting compound such as an ethylene-based compound. Examples of the charge transport material also include a positive hole-transporting compound such as a triarylamine-based compound, a benzidine-based compound, an aryl alkane-based compound, an aryl-substituted ethylene-based compound, a stilbene-based compound, an anthracene-based compound, and a hydrazone-based compound. These charge transport materials are used alone or in combination of two or more kinds thereof, but are not limited thereto.

From the viewpoint of charge mobility, for example, a triarylamine derivative represented by Structural Formula (a-1) or a benzidine derivative represented by Structural Formula (a-2) is preferable as the charge transport material.

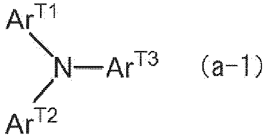

In Structural Formula (a-1), Ar^{T1}, Ar^{T2}, and Ar^{T3} each independently represent a substituted or unsubstituted aryl group, -C₆H₄-C(R^{T4})=C(R^{T5})(R^{T6}), or -C₆H₄-CH=CH-CH=C(R^{T7})(R^{T8}). R^{T4}, R^{T5}, R^{T6}, R^{T7}, and R^{T8} each independently represent a hydrogen atom, a substituted or unsubstituted alkyl group, or a substituted or unsubstituted aryl group.

Examples of the substituent of each group described above include a halogen atom, an alkyl group having 1 or more and 5 or less carbon atoms, and an alkoxy group having 1 or more and 5 or less carbon atoms. In addition, examples of the substituent of each group described above also include a substituted amino group substituted with an alkyl group having 1 or more and 3 or less carbon atoms.

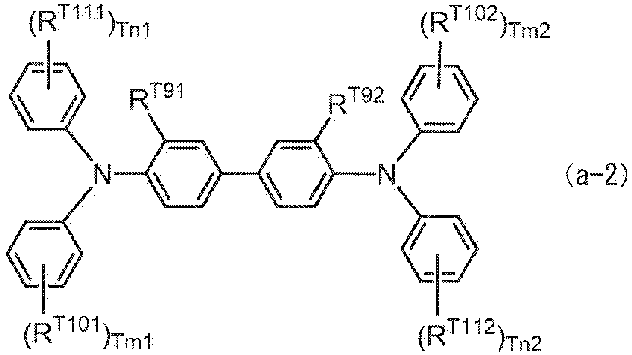

In Structural Formula (a-2), R^{T91} and R^{T92} each independently represent a hydrogen atom, a halogen atom, an alkyl group having 1 or more and 5 or less carbon atoms, or an alkoxy group having 1 or more and 5 or less carbon atoms. R^{T101}, R^{T102}, R^{T111}, and R^{T112} each independently represent a halogen atom, an alkyl group having 1 or more and 5 or less carbon atoms, an alkoxy group having 1 or more and 5 or less carbon atoms, an amino group substituted with an alkyl group having 1 or more and 2 or less carbon atoms, a substituted or unsubstituted aryl group, -C(R^{T12})-C(R^{T13})(R^{T14}), or -CH=CH-CH=C(R^{T15})(R^{T16}), in which R^{T12}, R^{T13}, R^{T14}, R^{T15}, and R^{T16} each independently represent a hydrogen atom, a substituted or unsubstituted alkyl group, or a substituted or unsubstituted aryl group. Tm1, Tm2, Tn1, and Tn2 each independently represent an integer of 0 or greater and 2 or less.

Examples of the substituent of each group described above include a halogen atom, an alkyl group having 1 or more and 5 or less carbon atoms, and an alkoxy group having 1 or more and 5 or less carbon atoms. In addition, examples of the substituent of each group described above also include a substituted amino group substituted with an alkyl group having 1 or more and 3 or less carbon atoms.

Among the triarylamine derivative represented by Structural Formula (a-1) and the benzidine derivative represented by Structural Formula (a-2), for example, a triarylamine derivative having "-C₆H₄-CH=CH-CH=C(R^{T7})(R^{T8})" or a benzidine derivative having "-CH=CH-CH=C(R^{T15})(R^{T16})" is particularly preferable from the viewpoint of the charge mobility.

As the polymer charge transport material, known materials having charge transport properties, such as poly-N-vinylcarbazole and polysilane, are used. In particular, for example, a polyester-based polymer charge transport material is particularly preferable. The polymer charge transport material may be used alone or in combination of the binder resin.

Examples of the binder resin used for the charge transport layer include a polycarbonate resin, a polyester resin, a polyarylate resin, a methacrylic resin, an acrylic resin, a polyvinyl chloride resin, a polyvinylidene chloride resin, a polystyrene resin, a polyvinyl acetate resin, a styrene-butadiene copolymer, a vinylidene chloride-acrylonitrile copolymer, a vinyl chloride-vinyl acetate copolymer, a vinyl chloride-vinyl acetate-maleic anhydride copolymer, a silicone resin, a silicone alkyd resin, a phenol-formaldehyde resin, a styrene-alkyd resin, poly-N-vinylcarbazole, and polysilane. Among the above, for example, a polycarbonate resin or a polyarylate resin is preferable as the binder resin. The binder resins are used alone or in combination of two or more kinds thereof.

A blending ratio between the charge transport material and the binder resin is, for example, preferably 10:1 to 1:5 in terms of mass ratio.

In a case where the charge transport layer is the outermost surface layer of the photoreceptor, the charge transport layer contains at least two kinds of resins. In a case where the charge transport layer is the outermost surface layer of the photoreceptor, the charge transport layer preferably contains, for example, at least one of a polyarylate resin or a polycarbonate resin, and more preferably contains a polyarylate resin and a polycarbonate resin. As a combination of the polyarylate resin and the polycarbonate resin, for example, a combination of resins each having a constitutional unit containing a biphenyl represented by Formula (BP) is preferable. As the polyarylate resin, for example, a polyarylate resin (PA) is preferable.

In a case where the charge transport layer is the outermost surface layer of the photoreceptor, the charge transport layer contains a phenolic compound. A form of the phenolic compound is as described above.

The charge transport layer may also contain other known additives.

The formation of the charge transport layer is not particularly limited, and a known formation method is used. For example, the charge transport layer is obtained by forming a coating film of a coating solution for forming a charge transport layer, which is obtained by adding the above-described components to a solvent, drying the coating film, and heating the coating film as necessary.

Examples of the solvent for preparing the coating solution for forming the charge transport layer include typical organic solvents such as aromatic hydrocarbons such as benzene, toluene, xylene, and chlorobenzene; ketones such as acetone and 2-butanone; halogenated aliphatic hydrocarbons such as methylene chloride, chloroform, and ethylene chloride; and cyclic or linear ethers such as tetrahydrofuran and ethyl ether. The solvents are used alone or in a form of a mixture of two or more kinds thereof.

Examples of the coating method of coating the charge generation layer with the coating solution for forming the charge transport layer include typical methods such as a blade coating method, a wire bar coating method, a spray coating method, a dip coating method, a bead coating method, an air knife coating method, and a curtain coating method.

The layer thickness of the charge transport layer is set to be, for example, preferably in a range of 5 µm or greater and 50 µm or less and more preferably in a range of 10 µm or greater and 30 µm or less.

### [Single Layer-Type Photosensitive Layer]

The single layer-type photosensitive layer (charge generation/charge transport layer) is, for example, a layer containing a charge generation material, a charge transport material, and as necessary, a binder resin and other known additives. These materials are the same as the materials described in the sections of the charge generation layer and the charge transport layer.

The content of the charge generation material in the single layer-type photosensitive layer may be, for example, 0.1% by mass or greater and 10% by mass or less and is preferably 0.8% by mass or greater and 5% by mass or less with respect to the total solid content. In addition, a content of the charge transport material in the single layer-type photosensitive layer may be, for example, 5% by mass or more and 50% by mass or less with respect to the total solid content.

The method of forming the single layer-type photosensitive layer is the same as the method of forming the charge generation layer or the charge transport layer.

The layer thickness of the single layer-type photosensitive layer may be, for example, 5 µm or greater and 50 µm or less and is preferably 10 µm or greater and 40 µm or less.

In a case where the single layer-type photosensitive layer is the outermost surface layer of the photoreceptor, the single layer-type photosensitive layer contains at least two resins. In a case where the single layer-type photosensitive layer is the outermost surface layer of the photoreceptor, the single layer-type photosensitive layer preferably contains, for example, at least one of a polyarylate resin or a polycarbonate resin, and more preferably contains a polyarylate resin and a polycarbonate resin. As a combination of the polyarylate resin and the polycarbonate resin, for example, a combination of resins each having a constitutional unit containing a biphenyl represented by Formula (BP) is preferable. As the polyarylate resin, for example, a polyarylate resin (PA) is preferable.

In a case where the single layer-type photosensitive layer is the outermost surface layer of the photoreceptor, the single layer-type photosensitive layer contains a phenolic compound. A form of the phenolic compound is as described above.

### <Image Forming Apparatus and Process Cartridge>

An image forming apparatus according to the present exemplary embodiment includes the electrophotographic photoreceptor, a charging device that charges a surface of the electrophotographic photoreceptor, an electrostatic latent image forming device that forms an electrostatic latent image on the charged surface of the electrophotographic photoreceptor, a developing device that develops the electrostatic latent image formed on the surface of the electrophotographic photoreceptor with a developer containing a toner to form a toner image, a transfer device that transfers the toner image to a surface of a recording medium, and a cleaning device that cleans the surface of the electrophotographic photoreceptor. Further, the electrophotographic photoreceptor according to the present exemplary embodiment is employed as the electrophotographic photoreceptor.

In the image forming apparatus according to the present exemplary embodiment, the cleaning device has a cleaning blade that comes into contact with an outer peripheral surface of the photoreceptor, and cleans a surface of the photoreceptor after transfer of the toner image and before charging by the cleaning blade.

As the image forming apparatus according to the present exemplary embodiment, known image forming apparatuses such as an apparatus including a fixing device that fixes a toner image transferred to the surface of a recording medium; a direct transfer type apparatus that transfers a toner image formed on the surface of an electrophotographic photoreceptor directly to a recording medium; an intermediate transfer type apparatus that primarily transfers a toner image formed on the surface of an electrophotographic photoreceptor to the surface of an intermediate transfer member and secondarily transfers the toner image transferred to the surface of the intermediate transfer member to the surface of a recording medium; an apparatus including a charge erasing device that erases the charges on the surface of the electrophotographic photoreceptor by applying the charge erasing light after the transfer of the toner image and before the charging; and an apparatus including an electrophotographic photoreceptor heating member for increasing the temperature of an electrophotographic photoreceptor and decreasing the relative temperature are employed.

In a case of the intermediate transfer-type apparatus, for example, the transfer device has a configuration including an intermediate transfer member with a surface on which the toner image will be transferred, a primary transfer device that performs primary transfer to transfer the toner image formed on the surface of the electrophotographic photoreceptor to the surface of the intermediate transfer member, and a secondary transfer device that performs secondary transfer to transfer the toner image transferred to the surface of the intermediate transfer member to the surface of a recording medium.

The image forming apparatus according to the present exemplary embodiment may be any of a dry development type image forming apparatus or a wet development type (development type using a liquid developer) image forming apparatus.

In the image forming apparatus according to the present exemplary embodiment, for example, the portion including the electrophotographic photoreceptor may have a cartridge structure (process cartridge) that is attachable to and detachable from the image forming apparatus. As the process cartridge, for example, a process cartridge including the electrophotographic photoreceptor according to the present exemplary embodiment is preferably used. The process cartridge may include, for example, at least one selected from the group consisting of a charging device, an electrostatic latent image forming device, a developing device, and a transfer device in addition to the electrophotographic photoreceptor.

Hereinafter, an example of the image forming apparatus according to the present exemplary embodiment will be described, but the present exemplary embodiment is not limited thereto. Further, main parts shown in the figures will be described, but description of other parts will not be provided.

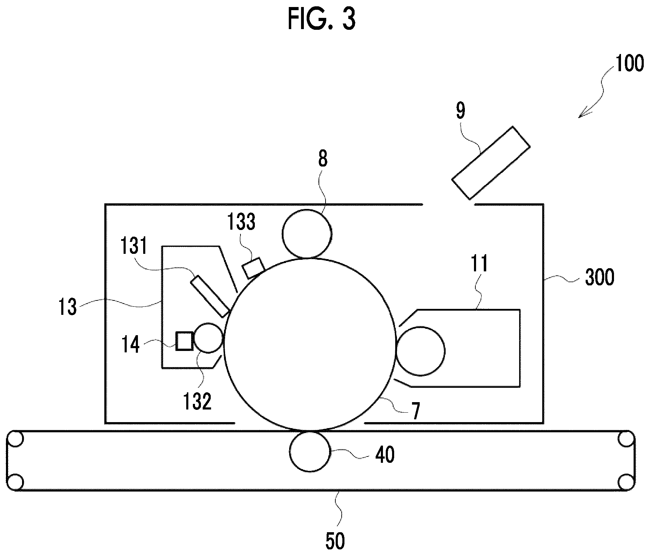

Fig. 3 is a schematic configuration view showing an example of an image forming apparatus according to the present exemplary embodiment.

As shown in Fig. 3, an image forming apparatus 100 according to the present exemplary embodiment includes a process cartridge 300 including an electrophotographic photoreceptor 7, an exposure device 9 (an example of the electrostatic latent image forming device), a transfer device 40 (primary transfer device), and an intermediate transfer member 50. In the image forming apparatus 100, the exposure device 9 is disposed at a position that can be exposed to the electrophotographic photoreceptor 7 from an opening portion of the process cartridge 300, the transfer device 40 is disposed at a position that faces the electrophotographic photoreceptor 7 via the intermediate transfer member 50, and the intermediate transfer member 50 is disposed such that a part of the intermediate transfer member 50 is in contact with the electrophotographic photoreceptor 7. Although not shown, the image forming apparatus also includes a secondary transfer device that transfers the toner image transferred to the intermediate transfer member 50 to a recording medium (for example, paper). The intermediate transfer member 50, the transfer device 40 (primary transfer device), and the secondary transfer device (not shown) correspond to an example of the transfer device.

The process cartridge 300 in Fig. 3 integrally supports the electrophotographic photoreceptor 7, a charging device 8 (an example of the charging device), a developing device 11 (an example of the developing device), and a cleaning device 13 (an example of the cleaning device) in a housing. The cleaning device 13 has a cleaning blade (an example of the cleaning member) 131, and a cleaning blade 131 is disposed to come into contact with the surface of the electrophotographic photoreceptor 7. The cleaning member may be a conductive or insulating fibrous member instead of the aspect of the cleaning blade 131, and may be used alone or in combination with the cleaning blade 131.

Fig. 3 shows an example of an image forming apparatus including a fibrous member 132 (roll shape) that supplies a lubricant 14 to the surface of the electrophotographic photoreceptor 7 and a fibrous member 133 (flat brush shape) that assists cleaning, but these are disposed as necessary.

Hereinafter, each configuration of the image forming apparatus according to the present exemplary embodiment will be described.

### -Charging Device-

The charging device 8 may be a contact type charging device in which the charging member is in contact with the outer peripheral surface of the photoreceptor, or may be a non-contact type charging device in which the charging member is not in contact with the outer peripheral surface of the photoreceptor. An effect (the contamination of the charging member is unlikely to occur for a long period of time) obtained by the image forming apparatus according to the present exemplary embodiment is remarkable in the contact type charging device.

As the charging device 8, for example, a contact-type charging member formed of a conductive or semi-conductive charging roller, a charging brush, a charging film, a charging rubber blade, a charging tube, or the like is used. Further, known chargers such as a non-contact type roller charger, a scorotron charger using corona discharge, and a corotron charger are also used.

### -Exposure Device-

Examples of the exposure device 9 include an optical system device that exposes the surface of the electrophotographic photoreceptor 7 to light such as a semiconductor laser beam, LED light, and liquid crystal shutter light in a predetermined image pattern. A wavelength of the light source is within the spectral sensitivity region of the electrophotographic photoreceptor. As a wavelength of a semiconductor laser, near infrared laser, which has an oscillation wavelength in the vicinity of 780 nm, is mostly used. However, the wavelength is not limited thereto, and a laser having an oscillation wavelength of an approximately 600 nm level or a laser having an oscillation wavelength of 400 nm or more and 450 nm or less as a blue laser may also be used. Further, a surface emission type laser light source capable of outputting a multi-beam is also effective for forming a color image.

### -Developing Device-

Examples of the developing device 11 include a typical developing device that performs development in contact or non-contact with the developer. The developing device 11 is not particularly limited as long as the device has the above-described functions, and is selected depending on the purpose thereof. Examples thereof include known developing machines having a function of attaching a one-component developer or a two-component developer to the electrophotographic photoreceptor 7 using a brush, a roller, or the like. Among these, for example, a developing device formed of a developing roller having a surface on which a developer is held is preferably used.

The developer used in the developing device 11 may be a one-component developer containing only a toner or a two-component developer containing a toner and a carrier. Further, the developer may be magnetic or non-magnetic. Known developers are employed as these developers.

### -Cleaning Device-

As the cleaning device 13, a cleaning blade type device including the cleaning blade 131 is used. In addition to the cleaning blade type device, a fur brush cleaning type device or a simultaneous development cleaning type device may be employed.

### -Transfer Device-

Examples of the transfer device 40 include transfer chargers known per se such as a contact-type transfer charger formed of a belt, a roller, a film, and a rubber blade, a scorotron transfer charger using corona discharge, and a corotron transfer charger.

### -Intermediate Transfer Member-

As the intermediate transfer member 50, a semi-conductive belt-like intermediate transfer member (intermediate transfer belt) containing polyimide, polyamide-imide, polycarbonate, polyarylate, polyester, rubber, or the like is used. Further, as the form of the intermediate transfer member, a drum-like intermediate transfer member may be used in addition to the belt-like intermediate transfer member.

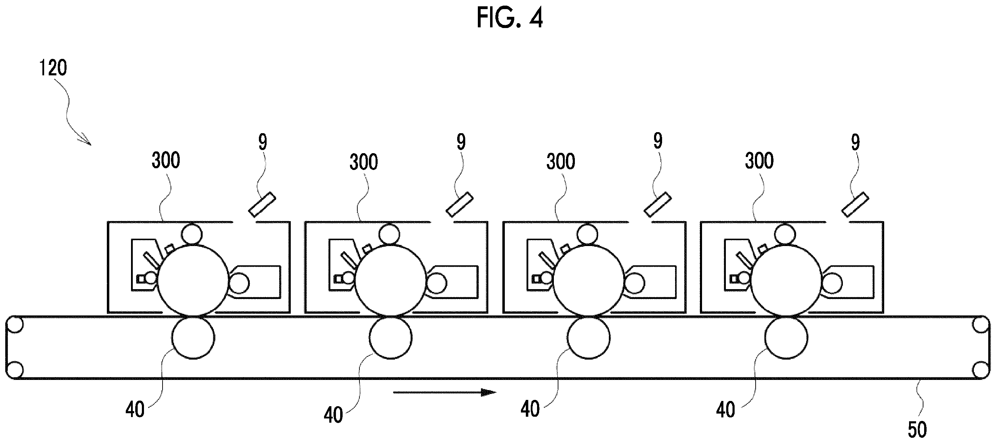

Fig. 4 is a schematic configuration view showing an example of an image forming apparatus according to the present exemplary embodiment.

An image forming apparatus 120 shown in Fig. 4 is a tandem type multicolor image forming apparatus in which four process cartridges 300 are mounted. The image forming apparatus 120 is configured such that four process cartridges 300 are arranged in parallel on the intermediate transfer member 50, and one electrophotographic photoreceptor is used for each color. The image forming apparatus 120 has the same configuration as the image forming apparatus 100 except that the image forming apparatus 120 is of a tandem type. Examples

Hereinafter, exemplary embodiments of the invention will be described in detail based on examples, but the exemplary embodiments of the invention are not limited to the examples.

In the following description, "parts" and "%" are on a mass basis unless otherwise specified.

In the following description, the synthesis, the treatment, the production, and the like are carried out at room temperature (25°C ± 3°C) unless otherwise specified.

### <Synthesis of Polyarylate Resin>

Polyarylate resins (PA1) to (PA7) are synthesized.

Table 1 shows units and formulations constituting the polyarylate resins.

A2-3 and the like listed in Table 1 are specific examples of the dicarboxylic acid unit (A) described above.

B1-2 and the like listed in Table 1 are specific examples of the diol unit (B) described above.

**[Table 1]**

| Polyarylate resin | Dicarboxylic acid unit (A) | | | | Diol unit (B) | | | | Mw |
|---|---|---|---|---|---|---|---|---|---|
| Number | Number | Mol% | Number | Mol% | Number | Mol% | Number | Mol% | k |
| PA1 | A2-3 | 50 | - | - | B1-2 | 50 | - | - | 110 |
| PA2 | A3-2 | 50 | - | - | B4-4 | 50 | - | - | 120 |
| PA3 | A3-2 | 25 | A4-3 | 25 | B4-6 | 50 | - | - | 115 |
| PA4 | A3-2 | 25 | A4-3 | 25 | B6-4 | 50 | - | - | 120 |
| PA5 | A3-2 | 25 | A4-3 | 25 | B4-4 | 50 | - | - | 125 |
| PA6 | A2-3 | 50 | - | - | B1-4 | 50 | - | - | 110 |
| PA7 | A3-2 | 50 | - | - | B3-4 | 50 | - | - | 120 |

### <Production of Photoreceptor>

The following materials are prepared as a material for forming the outermost surface layer (charge transport layer).
· Charge transport material CTM-1
· Charge transport material CTM-2

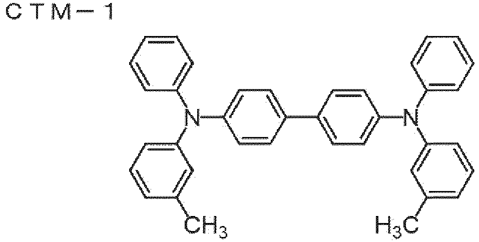

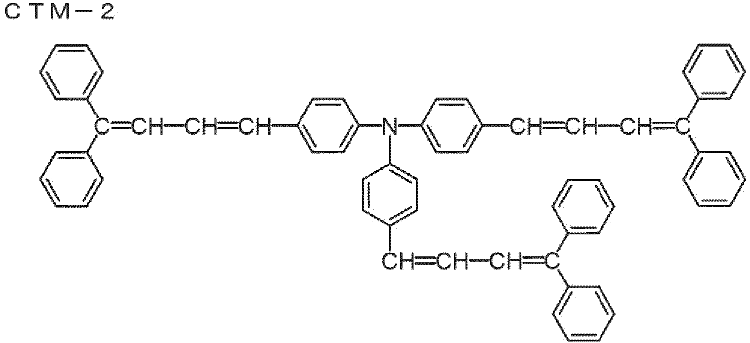

· Polycarbonate resin (PC1), viscosity average molecular weight: 50000
· Polycarbonate resin (PC2), viscosity average molecular weight: 45000
· Polycarbonate resin (PC3), viscosity average molecular weight: 40000

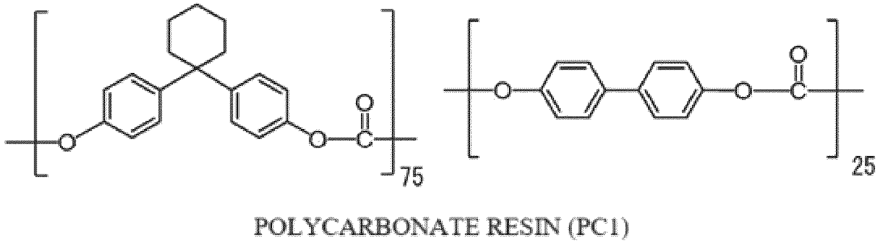

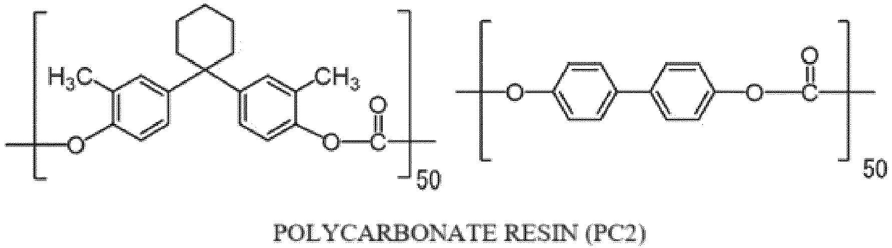

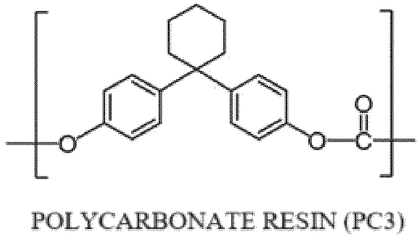

· Phenolic compound (PH1): ADEKA STAB AO-30, manufactured by ADEKA Corporation
· Phenolic compound (PH2): ADEKA STAB AO-50, manufactured by ADEKA Corporation
· Phenolic compound (PH3): ADEKA STAB AO-80, manufactured by ADEKA Corporation
· Phenolic compound (PH4): SUMILIZER MDP-S, manufactured by Sumitomo Chemical Co., Ltd.

### [Example 1]

### -Formation of Undercoat Layer-

3.5 parts of a butyral resin (trade name: S-LEC BM-1, manufactured by Sekisui Chemical Co., Ltd.) and 41 parts of methyl ethyl ketone are mixed and dissolved. 10 parts of a curing agent (blocked isocyanate, trade name: SUMIDUR 3175, Sumitomo Bayer Urethane Co., Ltd.), 45.5 parts of zinc oxide (trade name: SMZ-017N, TAYCA Corporation) surface-treated with a silane coupling agent (trade name: KBM603, Shin-Etsu Chemical Co., Ltd.), and 0.27 parts of the following compound are added and stirred, and then the mixture is dispersed for 2 hours with a sand mill using glass beads having a diameter of 1 mm. Further, 0.01 parts of dioctyl tin dilaurate and 2 parts of silicone resin particles (trade name: Tospearl 145, GE Toshiba Silicones) are added thereto and stirred, thereby obtaining a coating solution for forming an undercoat layer. The outer peripheral surface of the conductive substrate is coated with the coating solution for forming an undercoat layer by dip coating, and dried and cured at 170°C for 40 minutes to form an undercoat layer with a layer thickness of 20 µm.

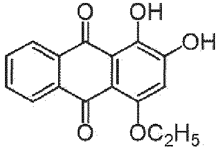

### -Formation of Charge Generation Layer-

A mixture consisting of 15 parts of hydroxygallium phthalocyanine as a charge generation material (having diffraction peaks at positions where Bragg angles (2θ ± 0.2°) in the X-ray diffraction spectrum using CuKα characteristic X-rays are at least of 7.5°, 9.9°, 12.5, 16.3°, 18.6°, 25.1°, and 28.3°), 10 parts of a vinyl chloride-vinyl acetate copolymer resin (trade name: VMCH, Nippon Unicar Company Limited) as a binder resin, and 200 parts of n-butyl acetate is dispersed in a sand mill for 4 hours using glass beads with a diameter of 1 mm. 175 parts of n-butyl acetate and 180 parts of methyl ethyl ketone are added to the dispersion liquid, and the mixture is stirred to obtain a coating solution for forming a charge generation layer. The undercoat layer is dipped and coated with the coating solution for forming a charge generation layer, and dried at room temperature to form a charge generation layer having a layer thickness of 0.25 µm.

### -Formation of Charge Transport Layer-

· Charge transport material: CTM-1 ... 47 parts
· Charge transport material: CTM-2 ... 20 parts
· Resin: polyarylate resin (PA1) ... 58 parts (60% of total resin)
· Resin: polycarbonate resin (PC1) ... 38 parts (40% of total resin)
· Phenolic compound (PH3) ... 4.9 parts
· Solvent: tetrahydrofuran ... 570 parts
· Solvent: toluene ... 57 parts

The above-described materials are stirred and mixed to obtain a coating solution for forming a charge transport layer. The charge generation layer is dipped and coated with the coating solution for forming a charge transport layer, and dried at 143°C for 30 minutes to form a charge transport layer having a layer thickness of 33 µm. In this way, a photoreceptor 1 is obtained.

### [Comparative Example 1]

A comparative photoreceptor 1 is obtained in the same manner as in Example 1, except that specifications of the charge transport layer are changed as shown in Table 2 and the outer peripheral surface is subjected to a polishing treatment.

### [Comparative Example 2, Examples 2 to 12, and Examples 14 to 18]

Each photoreceptor is produced in the same manner as in Example 1, except that specifications of the charge transport layer are changed as shown in Table 2.

A proportion of the resin shown in Table 2 is a mass proportion with respect to a total amount of the polyarylate resin and the polycarbonate resin. A content of the phenolic compound shown in Table 2 is a mass proportion with respect to a mass of the entire charge transport layer.

### [Example 13]

A photoreceptor 13 is obtained in the same manner as in Example 1, except that a composition of the charge transport layer is changed as follows.
· Charge transport material: CTM-1 ... 71 parts
· Resin: polyarylate resin (PA1) ... 28 parts (30% of total resin)
· Resin: polycarbonate resin (PC1) ... 66 parts (70% of total resin)
· Phenolic compound (PH3) ... 2.8 parts
· Solvent: tetrahydrofuran ... 570 parts
· Solvent: toluene ... 57 parts

### <Performance Evaluation>

The photoreceptor of each of Examples and Comparative Examples is mounted on an electrophotographic image forming apparatus (the model is shown in Table 2, and all of which are manufactured by Xerox Corporation).

The developing machine is filled with a two-component developer (that is, a developer containing a toner and a carrier). The toner used contains silica particles subjected to a surface treatment with silicone oil as an external additive.

Using the image forming apparatus, 10,000 sheets of A4 plain paper are output in an environment of a temperature of 25°C and a relative humidity of 50% with a black image having a density of 0.5%. During this image formation period, for performance evaluation described later, the image formation is temporarily stopped after 10 sheets are output.

### [Measurement of RzJIS]

The RzJIS of the outer peripheral surface of the photoreceptor is measured before the use of the photoreceptor and after the image formation. The measuring method is as described above. The results are listed in Table 2.

A Z-axis direction resolution of the AFM system used for the measurement is 0.01 nm. In a case where the surface roughness cannot be detected, "<0.01" is noted in Table 2.

### [Contamination of Photoreceptor/Charging Device]

After outputting 10 sheets and after outputting 10,000 sheets of the above-described image formation, the outer peripheral surfaces of the photoreceptor and the charging device are observed with the naked eye and a loupe (×25), and the degree of contamination is classified as follows. The results are listed in Table 2.
5: No contamination is observed on the photoreceptor and the charging device with a loupe.
4: Slight streak-like attachments are visible on the photoreceptor with a loupe. No contamination is observed on the charging device with a loupe.
3: Streak-like attachments are visible on the photoreceptor with the naked eye. No contamination is observed on the charging device with a loupe.
2: Streak-like attachments are visible on the photoreceptor with the naked eye. Slight streak-like attachments are visible on the charging device with a loupe. 2 refers to a level at which there is no problem in monochrome printing, but there is a problem in color printing.
1: Streak-like attachments are visible on the photoreceptor with the naked eye. Streak-like attachments are visible on the charging device with the naked eye. 1 refers to a level at which there is a problem even in monochrome printing.

### [Blade Chattering]

The blade chattering (a noise caused by vibration of the photoreceptor cleaning blade) is likely to occur in a case where the rotating photoreceptor is stopped. In the image formation, the presence or absence of blade chattering is directly checked by ear at the vicinity of the image forming apparatus during a period in which 10 sheets are output and stopped and during a period slightly before 10,000 sheets are output and stopped, and the results are classified as follows. The results are listed in Table 2.
5: Blade chattering is not audible.
4: Slight sound is audible during the stop. 4 refers to a level at which the blade chattering is not audible in the office.
3: Slight sound is audible during the stop. 3 refers to a level at which the blade chattering is slightly audible in the office.
2: Sound is slightly audible from the time of output.
1: Sound is audible from the time of output.

### [Scratches on Outer Peripheral Surface of Photoreceptor]

After outputting 10,000 sheets of the above-described image formation, the outer peripheral surface of the photoreceptor is observed with the naked eye and a loupe (×25), and the presence or absence of scratches is classified as follows. The results are listed in Table 2.
5: No scratches are observed with a loupe.
4: Streaks are faintly visible with a loupe.
3: Streaks are clearly visible with a loupe.
2: Streaks are faintly visible with the naked eye.
1: Streaks are clearly visible with the naked eye.

### [Oxidative Deterioration of Photoreceptor]

After outputting 10,000 sheets of the above-described image formation, 1,000 sheets of a black image having an image density of 0.5% are further output to A4 plain paper in an environment of a temperature of 29°C and a relative humidity of 90%. Next, the image forming apparatus is left in the same environment for 2 days. Next, in the same environment, 100 sheets of black images having an image density of 5% are output to A4 plain paper. 100 images are observed with the naked eye and a loupe (×25) and classified as follows. The results are listed in Table 2.

This series of image formation imitates office use with two days off a week. The image forming apparatus is placed in a high temperature and high humidity environment while the air conditioning of the office is stopped. In a case where the outer peripheral surface of the photoreceptor is oxidatively deteriorated during this period, image defects occur in a case where the image forming apparatus is restarted after a break.
5: Image defects are not observed.
4: Image defects are faintly visible on the first sheet with a loupe. On the second and subsequent sheets, image defects are not observed.
3: Image defects are faintly visible with the naked eye on the first sheet. On the second to fifth sheets, image defects are not observed even in a case where a loupe is used.
2: Image defects are visible with the naked eye on the first to tenth sheets. On the 11th to 100th sheets, image defects are not observed even in a case where a loupe is used.
1: Image defects are visible with the naked eye on the first to 100th sheets.

A proportion of the resin shown in Table 2 is a mass proportion with respect to a total amount of the polyarylate resin and the polycarbonate resin. A content of the phenolic compound shown in Table 2 is a mass proportion with respect to a mass (that is, the total solid content) of the entire charge transport layer.

**[Table 2]**

| | Photoreceptor No | Outermost surface layer (Charge transport layer) | | | | | | | | | Perfomance evaluation | | | | | | |
|---|---|---|---|---|---|---|---|---|---|---|---|---|---|---|---|---|---|
| | | Resin | | | | Phenol compound | | Layer thickness | RzJIS | | Image forming apparatus | Contamination of photoreceptor/charging device | | Blade chattening | | Photoreceptor | |
| | | Polyarylate | | Polycarbonate | | | | | | | | | | | | | |
| | | Type | Proportion | Type | Proportion | Type | Content | | Before use | After image formation | | 10 sheets | 10000 sheets | 10 sheets | 10000 sheets | Scratches on outer peripheral surface | Oxidative deterioration |
| | | - | Mass% | - | Mass% | - | Mass% | µm | nm | nm | Type | - | - | - | - | - | - |
| Comparative Example 1 | Comparative photoreceptor 1 | PA1 | 60 | PC3 | 40 | - | 0 | 33 | 110 | 150 | PrimeLink B9100 | 4 | 2 | 5 | 4 | 1 | 2 |
| Comparative Example 2 | Comparative photoreceptor 2 | PA3 | 100 | - | 0 | - | 0 | 33 | <0.01 | 0.05 | PrimeLink B9100 | 4 | 1 | 4 | 2 | 3 | 1 |
| Example 1 | Photoreceptor 1 | PA1 | 60 | PC1 | 40 | PH3 | 3 | 33 | 44 | 7.5 | PrimeLink B9100 | 5 | 5 | 5 | 5 | 5 | 5 |
| Example 2 | Photoreceptor 2 | PA1 | 85 | PC1 | 15 | PH3 | 3 | 33 | 2.5 | 3.2 | PrimeLink B9100 | 5 | 4 | 5 | 4 | 5 | 4 |
| Example 3 | Photoreceptor 3 | PA1 | 85 | PC1 | 15 | PH1 | 3 | 33 | 01 | 0.5 | PrimeLink B9100 | 5 | 3 | 4 | 3 | 5 | 4 |
| Example 4 | Photoreceptor 4 | PA1 | 60 | PC2 | 40 | PH3 | 3 | 33 | 100 | 75 | PrimeLink B9100 | 5 | 3 | 5 | 5 | 4 | 4 |
| Example 5 | Photoreceptor 5 | PA1 | 60 | PC1 | 40 | PH2 | 3 | 33 | 23 | 3.6 | PrimeLink B9100 | 5 | 5 | 5 | 5 | 5 | 4 |
| Example 6 | Photoreceptor 6 | PA1 | 60 | PC1 | 40 | PH4 | 3 | 33 | 3.8 | 4.8 | PrimeLink B9100 | 5 | 5 | 5 | 5 | 5 | 5 |
| Example 7 | Photoreceptor 7 | PA2 | 60 | PC2 | 40 | PH3 | 3 | 33 | 75 | 85 | PrimeLink B9100 | 5 | 3 | 5 | 5 | 4 | 4 |
| Example 8 | Photoreceptor 8 | PA3 | 60 | PC1 | 40 | PH4 | 3 | 33 | 50 | 63 | PrimeLink B9100 | 5 | 4 | 5 | 4 | 5 | 4 |
| Example 9 | Photoreceptor 9 | PA4 | 60 | PC1 | 40 | PH4 | 3 | 33 | 35 | 45 | PrimeLink B9100 | 5 | 4 | 5 | 5 | 5 | 4 |
| Example 10 | Photoreceptor 10 | PA5 | 60 | PC1 | 40 | PH4 | 3 | 33 | 30 | 38 | PrimeLink B9100 | 5 | 4 | 5 | 5 | 5 | 4 |
| Example 11 | Photoreceptor 11 | PA6 | 60 | PC1 | 40 | PH4 | 3 | 33 | 35 | 45 | PrimeLink B9100 | 5 | 5 | 5 | 5 | 5 | 5 |
| Example 12 | Photoreceptor 12 | PA7 | 60 | PC1 | 40 | PH4 | 3 | 33 | 30 | 37 | PrimeLink B9100 | 5 | 5 | 5 | 5 | 5 | 5 |
| Example 13 | Photoreceptor 13 | PA1 | 30 | PC1 | 70 | PH3 | 1.6 | 40 | 5.5 | 6.5 | AltaLink C8070 | 5 | 5 | 5 | 5 | 5 | 5 |
| Example 14 | Photoreceptor 14 | PA1 | 60 | PC1 | 40 | PH3 | 3 | 22 | 5.8 | 6.5 | Docu Centre SC2020 | 5 | 5 | 5 | 5 | 5 | 5 |
| Example 15 | Photoreceptor 15 | PA1 | 60 | PC1 | 40 | PH3 | 3 | 24 | 5.8 | 7.5 | VersaLink C7120 | 5 | 5 | 5 | 5 | 5 | 5 |
| Example 16 | Photoreceptor 16 | PA1 | 60 | PC1 | 40 | PH3 | 3 | 32 | 5.8 | 8.0 | VersaLink B7125 | 5 | 5 | 5 | 5 | 5 | 5 |
| Example 17 | Photoreceptor 17 | PA1 | 60 | PC1 | 40 | PH3 | 3 | 32 | 5.8 | 8.5 | Versant 4100 Press | 5 | 5 | 5 | 5 | 5 | 5 |
| Example 18 | Photoreceptor 18 | PA1 | 60 | PC1 | 40 | PH3 | 3 | 32 | 5.8 | 8.7 | Versant 280 Press | 5 | 5 | 5 | 5 | 5 | 5 |

The electrophotographic photoreceptor, the process cartridge, and the image forming apparatus according to the present disclosure include the following aspects. Each formula is the same as the formula having the same number described above.

### (Supplementary Notes)

(((1))) An electrophotographic photoreceptor comprising:
   a conductive substrate; and
   a photosensitive layer disposed on the conductive substrate,
   wherein an outermost surface layer contains a charge transport material, two or more kinds of resins, and a phenolic compound, and
   RzJIS on an outer peripheral surface is 0.1 nm or more and 100 nm or less.
(((2))) The electrophotographic photoreceptor according to (((1))),
   wherein the RzJIS of the outer peripheral surface is 0.5 nm or more and 50 nm or less.
(((3))) The electrophotographic photoreceptor according to (((1))) or (((2))),
   wherein the phenolic compound includes a hindered phenolic compound.
(((4))) The electrophotographic photoreceptor according to any one of (((1))) to (((3))),
   wherein the two or more kinds of resins include at least one of a polyarylate resin or a polycarbonate resin.
(((5))) The electrophotographic photoreceptor according to any one of (((1))) to (((4))),
   wherein the two or more kinds of resins include a polyarylate resin having a dicarboxylic acid unit represented by Formula (A) and a diol unit represented by Formula (B).
(((6))) The electrophotographic photoreceptor according to (((5))),
   wherein the dicarboxylic acid unit represented by Formula (A) includes at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented Formula (A4), and a dicarboxylic acid unit (A5) represented by Formula (A5).
(((7))) The electrophotographic photoreceptor according to (((5))) or (((6))),
   wherein the diol unit represented by Formula (B) includes at least one selected from the group consisting of a diol unit (B 1) represented by Formula (B 1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).
(((8))) The electrophotographic photoreceptor according to any one of (((1))) to (((7))),
   wherein the outermost surface layer contains a polyarylate resin and a polycarbonate resin.
(((9))) The electrophotographic photoreceptor according to (((8))),
   wherein the polyarylate resin and the polycarbonate resin each have a constitutional unit including biphenyl represented by Formula (BP).
(((10))) The electrophotographic photoreceptor according to (((8))) or (((9))),
   wherein a proportion of the polyarylate resin in a total amount of the polyarylate resin and the polycarbonate resin contained in the outermost surface layer is 25% by mass or more and 75% by mass or less.
(((11))) The electrophotographic photoreceptor according to any one of (((1))) to (((10))),
   wherein the photosensitive layer includes a charge generation layer and a charge transport layer, and
   the charge transport layer is the outermost surface layer.
(((12))) A process cartridge comprising:
   the electrophotographic photoreceptor according to any one of (((1))) to (((11))),
   wherein the process cartridge is attachable to and detachable from an image forming apparatus.
(((13))) An image forming apparatus comprising:
   the electrophotographic photoreceptor according to any one of (((1))) to (((11)));
   a charging device that charges a surface of the electrophotographic photoreceptor;
   an electrostatic latent image forming device that forms an electrostatic latent image on the charged surface of the electrophotographic photoreceptor;
   a developing device that develops the electrostatic latent image formed on the surface of the electrophotographic photoreceptor with a developer containing a toner to form a toner image;
   a transfer device that transfers the toner image to a surface of a recording medium; and
   a cleaning device that has a cleaning blade coming into contact with the surface of the electrophotographic photoreceptor and cleans the surface of the electrophotographic photoreceptor.

According to (((1))), (((3))), (((4))), (((5))), (((6))), (((7))), or (((11))), there is provided an electrophotographic photoreceptor in which contamination of a charging member and a noise caused by vibration of a photoreceptor cleaning blade are less likely to occur for a long period of time, as compared with an electrophotographic photoreceptor in which RzJIS of an outer peripheral surface is less than 0.1 nm or more than 100 nm.

According to (((2))), there is provided an electrophotographic photoreceptor in which contamination of a charging member and a noise caused by vibration of a photoreceptor cleaning blade are less likely to occur for a long period of time, as compared with an electrophotographic photoreceptor in which RzJIS of an outer peripheral surface is less than 0.5 nm or more than 50 nm.

According to (((8))), there is provided an electrophotographic photoreceptor in which contamination of a charging member and a noise caused by vibration of a photoreceptor cleaning blade are less likely to occur for a long period of time, as compared with a form in which an outermost surface layer contains only one of a polyarylate resin or a polycarbonate resin.

According to (((9))), there is provided an electrophotographic photoreceptor in which contamination of a charging member and a noise caused by vibration of a photoreceptor cleaning blade are less likely to occur for a long period of time, as compared with a form in which at least one of a polyarylate resin or a polycarbonate resin does not have a constitutional unit including biphenyl represented by Formula (BP).

According to (((10))), there is provided an electrophotographic photoreceptor in which contamination of a charging member and a noise caused by vibration of a photoreceptor cleaning blade are less likely to occur for a long period of time, as compared with an electrophotographic photoreceptor in which a proportion of a polyarylate resin in a total amount of a polyarylate resin and a polycarbonate resin included in an outermost surface layer is less than 25% by mass or more than 75% by mass.

According to (((12))), there is provided a process cartridge in which contamination of a charging member and a noise caused by vibration of a photoreceptor cleaning blade are less likely to occur for a long period of time, as compared with a process cartridge in which RzJIS of an outer peripheral surface of an electrophotographic photoreceptor is less than 0.1 nm or more than 100 nm.

According to (((13))), there is provided an image forming apparatus in which contamination of a charging member and a noise caused by vibration of a photoreceptor cleaning blade are less likely to occur for a long period of time, as compared with an image forming apparatus in which RzJIS of an outer peripheral surface of an electrophotographic photoreceptor is less than 0.1 nm or more than 100 nm.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: conductive substrate
2: undercoat layer
3: charge generation layer
4: charge transport layer
5: photosensitive layer
10A: photoreceptor
10B: photoreceptor

7: electrophotographic photoreceptor
8: charging device
9: exposure device
11: developing device
13: cleaning device
14: lubricant
40: transfer device
50: intermediate transfer member
100: image forming apparatus
120: image forming apparatus
131: cleaning blade
132: fibrous member (roll shape)
133: fibrous member (flat brush shape)
300: process cartridge

## Claims

1. An electrophotographic photoreceptor comprising:
a conductive substrate; and
a photosensitive layer disposed on the conductive substrate,
wherein an outermost surface layer contains a charge transport material, two or more kinds of resins, and a phenolic compound, and
RzJIS on an outer peripheral surface is 0.1 nm or more and 100 nm or less.

2. The electrophotographic photoreceptor according to claim 1,
wherein the RzJIS of the outer peripheral surface is 0.5 nm or more and 50 nm or less.

3. The electrophotographic photoreceptor according to claim 1 or 2,
wherein the phenolic compound includes a hindered phenolic compound.

4. The electrophotographic photoreceptor according to any one of claims 1 to 3,
wherein the two or more kinds of resins include at least one of a polyarylate resin or a polycarbonate resin.

5. The electrophotographic photoreceptor according to any one of claims 1 to 4,
wherein the two or more kinds of resins include a polyarylate resin having a dicarboxylic acid unit represented by Formula (A) and a diol unit represented by Formula (B), 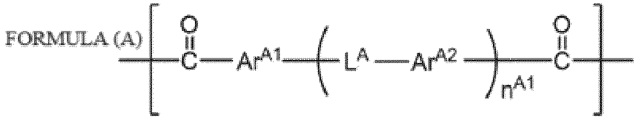 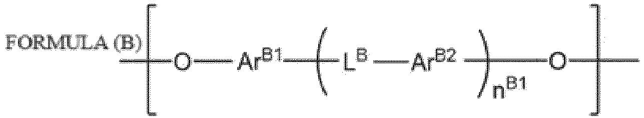
in Formula (A), Ar^{A1} and Ar^{A2} are each independently an aromatic ring which may have a substituent, L^{A} is a single bond or a divalent linking group, and n^{A1} is 0, 1, or 2,
in Formula (B), Ar^{B1} and Ar^{B2} are each independently an aromatic ring which may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

6. The electrophotographic photoreceptor according to claim 5,
wherein the dicarboxylic acid unit represented by Formula (A) includes at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented Formula (A4), and a dicarboxylic acid unit (A5) represented by Formula (A5), 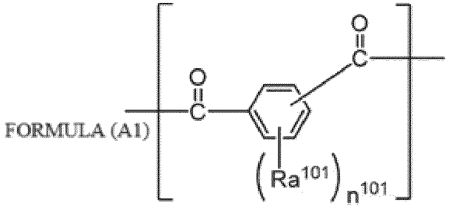 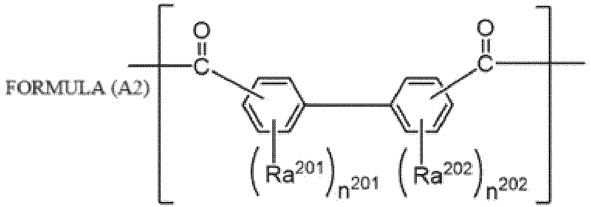 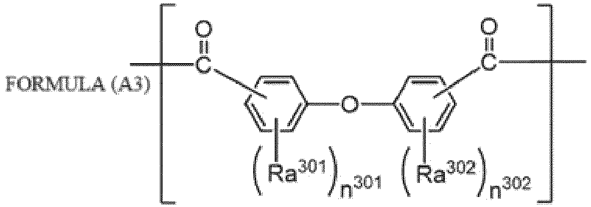 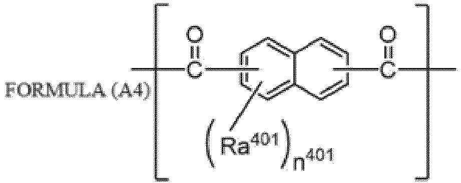 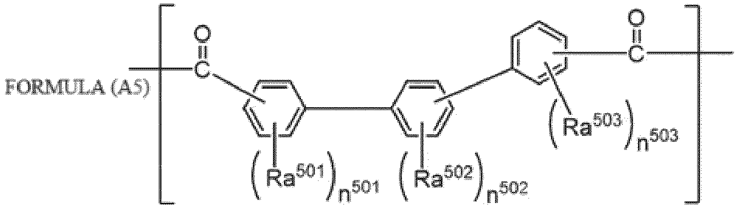
in Formula (A1), n¹⁰¹ is an integer of 0 or greater and 4 or less, and n¹⁰¹ pieces of Ra¹⁰¹'s are each independently an alkyl group having 1 or more and 10 or less carbon atoms, an aryl group having 6 or more and 12 or less carbon atoms, or an alkoxy group having 1 or more and 6 or less carbon atoms,
in Formula (A2), n²⁰¹ and n²⁰² are each independently an integer of 0 or greater and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms,
in Formula (A3), n³⁰¹ and n³⁰² are each independently an integer of 0 or greater and 4 or less, and n³⁰¹ pieces of Ra³⁰¹'s and n³⁰² pieces of Ra³⁰²'s are each independently an alkyl group having 1 or more and 10 or less carbon atoms, an aryl group having 6 or more and 12 or less carbon atoms, or an alkoxy group having 1 or more and 6 or less carbon atoms,
in Formula (A4), n⁴⁰¹ is an integer of 0 or greater and 6 or less, and n⁴⁰¹ pieces of Ra⁴⁰¹'s are each independently an alkyl group having 1 or more and 10 or less carbon atoms, an aryl group having 6 or more and 12 or less carbon atoms, or an alkoxy group having 1 or more and 6 or less carbon atoms,
in Formula (A5), n⁵⁰¹, n⁵⁰², and n⁵⁰³ are each independently an integer of 0 or greater and 4 or less, and n⁵⁰¹ pieces of Ra⁵⁰¹'s, n⁵⁰² pieces of Ra⁵⁰²'s, and n⁵⁰³ pieces of Ra⁵⁰³'s are each independently an alkyl group having 1 or more and 10 or less carbon atoms, an aryl group having 6 or more and 12 or less carbon atoms, or an alkoxy group having 1 or more and 6 or less carbon atoms.

7. The electrophotographic photoreceptor according to claim 5 or 6,
wherein the diol unit represented by Formula (B) includes at least one selected from the group consisting of a diol unit (B 1) represented by Formula (B 1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8), 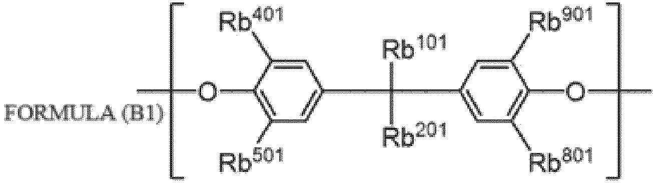 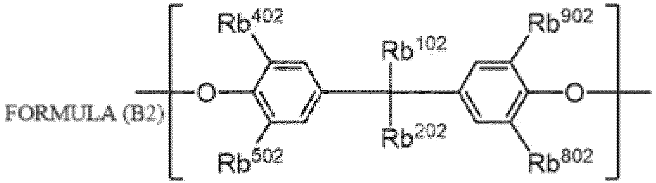 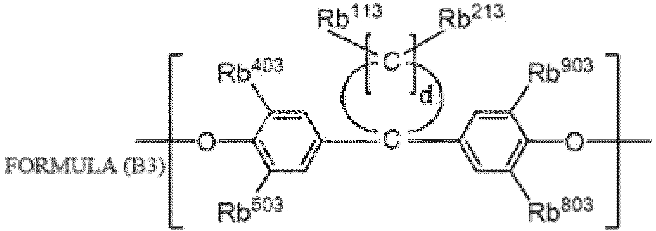 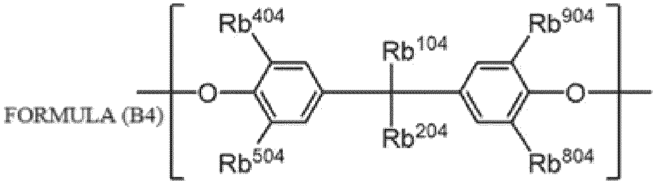 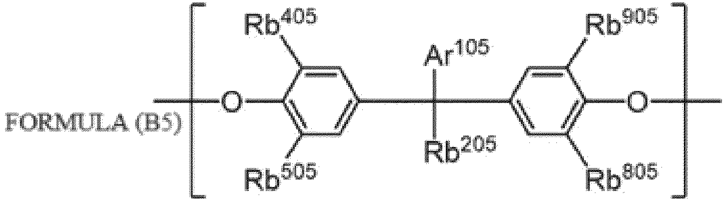 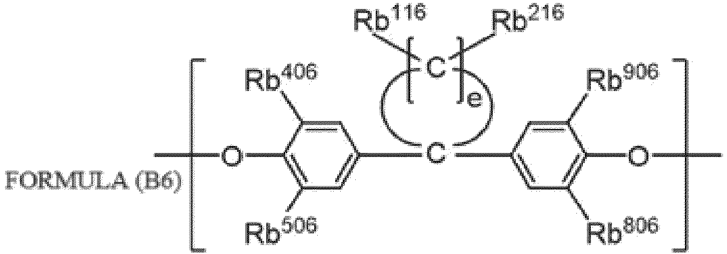 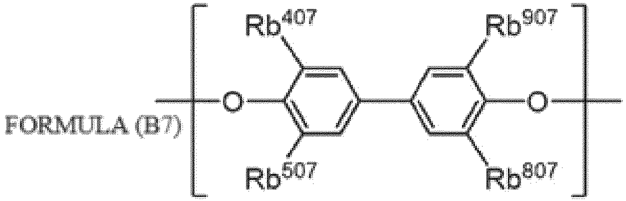 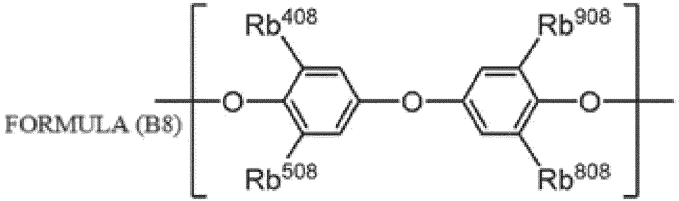
in Formula (B 1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom,
in Formula (B2), Rb¹⁰² is a linear alkyl group having 4 or more and 20 or less carbon atoms, Rb²⁰² is a hydrogen atom or an alkyl group having 1 or more and 3 or less carbon atoms, and Rb⁴⁰², Rb⁵⁰², Rb⁸⁰², and Rb⁹⁰² are each independently a hydrogen atom, an alkyl group having 1 or more and 4 or less carbon atoms, an alkoxy group having 1 or more and 6 or less carbon atoms, or a halogen atom,
in Formula (B3), Rb¹¹³ and Rb²¹³ are each independently a hydrogen atom, a linear alkyl group having 1 or more and 3 or less carbon atoms, an alkoxy group having 1 or more and 4 or less carbon atoms, or a halogen atom, d is an integer of 7 or greater and 15 or less, and Rb⁴⁰³, Rb⁵⁰³ Rb⁸⁰³, and Rb⁹⁰³ are each independently a hydrogen atom, an alkyl group having 1 or more and 4 or less carbon atoms, an alkoxy group having 1 or more and 6 or less carbon atoms, or a halogen atom,
in Formula (B4), Rb¹⁰⁴ and Rb²⁰⁴ are each independently a hydrogen atom or an alkyl group having 1 or more and 3 or less carbon atoms, and Rb⁴⁰⁴, Rb⁵⁰⁴, Rb⁸⁰⁴, and Rb⁹⁰⁴ are each independently a hydrogen atom, an alkyl group having 1 or more and 4 or less carbon atoms, an alkoxy group having 1 or more and 6 or less carbon atoms, or a halogen atom,
in Formula (B5), Ar¹⁰⁵ is an aryl group having 6 or more and 12 or less carbon atoms or an aralkyl group having 7 or more and 20 or less carbon atoms, Rb²⁰⁵ is a hydrogen atom or an alkyl group having 1 or more and 3 or less carbon atoms, and Rb⁴⁰⁵, Rb⁵⁰⁵, Rb⁸⁰⁵, and Rb⁹⁰⁵ are each independently a hydrogen atom, an alkyl group having 1 or more and 4 or less carbon atoms, an alkoxy group having 1 or more and 6 or less carbon atoms, or a halogen atom,
in Formula (B6), Rb¹¹⁶ and Rb²¹⁶ are each independently a hydrogen atom, a linear alkyl group having 1 or more and 3 or less carbon atoms, an alkoxy group having 1 or more and 4 or less carbon atoms, or a halogen atom, e is an integer of 4 or greater and 6 or less, and Rb⁴⁰⁶, Rb⁵⁰⁶, Rb⁸⁰⁶, and Rb⁹⁰⁶ are each independently a hydrogen atom, an alkyl group having 1 or more and 4 or less carbon atoms, an alkoxy group having 1 or more and 6 or less carbon atoms, or a halogen atom,
in Formula (B7), Rb⁴⁰⁷, Rb⁵⁰⁷, Rb⁸⁰⁷, and Rb⁹⁰⁷ are each independently a hydrogen atom, an alkyl group having 1 or more and 4 or less carbon atoms, an alkoxy group having 1 or more and 6 or less carbon atoms, or a halogen atom,
in Formula (B8), Rb⁴⁰⁸, Rb⁵⁰⁸, Rb⁸⁰⁸, and Rb⁹⁰⁸ are each independently a hydrogen atom, an alkyl group having 1 or more and 4 or less carbon atoms, an alkoxy group having 1 or more and 6 or less carbon atoms, or a halogen atom.

8. The electrophotographic photoreceptor according to any one of claims 1 to 7,
wherein the outermost surface layer contains a polyarylate resin and a polycarbonate resin.

9. The electrophotographic photoreceptor according to claim 8,
wherein the polyarylate resin and the polycarbonate resin each have a constitutional unit including biphenyl represented by Formula (BP), 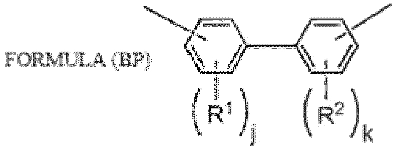
in Formula (BP), j is an integer of 0 or greater and 4 or less, j pieces of R¹'s are each independently a methyl group or an ethyl group, k is an integer of 0 or greater and 4 or less, and k pieces of R²'s are each independently a methyl group or an ethyl group.

10. The electrophotographic photoreceptor according to claim 8 or 9,
wherein a proportion of the polyarylate resin in a total amount of the polyarylate resin and the polycarbonate resin contained in the outermost surface layer is 25% by mass or more and 75% by mass or less.

11. The electrophotographic photoreceptor according to any one of claims 1 to 10,
wherein the photosensitive layer includes a charge generation layer and a charge transport layer, and
the charge transport layer is the outermost surface layer.

12. A process cartridge comprising:
the electrophotographic photoreceptor according to any one of claims 1 to 11,
wherein the process cartridge is attachable to and detachable from an image forming apparatus.

13. An image forming apparatus comprising:
the electrophotographic photoreceptor according to any one of claims 1 to 11;
a charging device that charges a surface of the electrophotographic photoreceptor;
an electrostatic latent image forming device that forms an electrostatic latent image on the charged surface of the electrophotographic photoreceptor;
a developing device that develops the electrostatic latent image formed on the surface of the electrophotographic photoreceptor with a developer containing a toner to form a toner image;
a transfer device that transfers the toner image to a surface of a recording medium; and
a cleaning device that has a cleaning blade coming into contact with the surface of the electrophotographic photoreceptor and cleans the surface of the electrophotographic photoreceptor.
